# EUROPEAN PATENT SPECIFICATION

(11) **EP 3 979 729 B1**
(45) Date of publication and mention of the grant of the patent: **12.03.2025**
(21) Application number: 19930436.1
(22) Date of filing: 31.05.2019
(51) Int. Cl.: H04L 5/00, H04L 1/1607, H04L 1/1829, H04L 1/1867, H04B 7/06

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 06.04.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2019/021872
(87) International publication number: WO 2020/240868

(56) References cited:
- WO-A1-2018/167958
- US-A1- 2018 019 843
- CMCC: "Discussion on DL multi-TRP transmission", vol. RAN WG1, no. Taipei; 20190121 - 20190125, 20 January 2019 (2019-01-20), XP051593332, Retrieved from the Internet <URL:http://www.3gpp.org/ftp/Meetings%5F3GPP%5FSYNC/RAN1/Docs/R1%2D1900418%2Ezip> [retrieved on 20190120]
- QUALCOMM INCORPORATED: "Multi-TRP Enhancements", 3GPP TSG-RAN WG1 MEETING #97 R1- 1907289, 4 May 2019 (2019-05-04), XP051709312
- LG ELECTRONICS: "Enhancements on multi-TRP/panel transmission", 3GPP TSG RAN WG1 MEETING #97 R1-1906730, 4 May 2019 (2019-05-04), XP051708766

## Description

### Technical Field

The present disclosure relates to a user terminal and radio communication method in the next-generation mobile communication system.

### Background Art

In Universal Mobile Telecommunications System (UMTS) networks, for the purpose of higher data rates, low delay and the like, Long Term Evolution (LTE) has been specified (Non-patent Document 1). Further, for the purpose of higher capacity, more sophistication and the like than LTE (Third Generation Partnership Project (3GPP) Release (Rel.) 8, 9), LTE-Advanced (3GPP Rel. 10-14) has been specified.

Successor systems (e.g., also referred to as 5th generation mobile communication system (5G), 5G+ (plus), New Radio (NR), 3GPP Rel.15 onward, etc.) to LTE have also been studied.

US 2018/019843 A1 discloses a method of a user equipment (UE) for constructing a hybrid automatic repeat request acknowledgement (HARQ-ACK) codebook. The method comprises receiving physical downlink control channels (PDCCHs) that convey respective downlink control information (DCI) formats, wherein each DCI format includes a counter field and a slot offset field, receiving physical downlink data channels (PDSCHs) that convey data transport blocks, detecting the DCI formats configuring the received PDSCHs, determining locations for HARQ-ACK bits in a HARQ-ACK codebook based on a value of the slot offset field and a value of the counter field in each detected DCI format, determining a time unit for transmission of the HARQ-ACK codebook based on a value of the slot offset field in each detected DCI format, and transmitting the HARQ-ACK codebook.

### Prior Art Document

### Non-patent Document

[Non-patent Document 1] 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Disclosure of Invention

### Problems to be Solved by the Invention

In future radio communication systems (e.g., NR), it is studied that one or a plurality of transmission/reception points (Transmission/Reception Point (TRP)) (multi-TRP) performs DL transmission to a user terminal (User Equipment (UE)).

As one technique of Hybrid Automatic Repeat reQuest ACKnowledgement (HARQ-ACK) feedback in the case of using multi-TRP, studied are separate HARQ-ACK feedback and joint HARQ-ACK feedback.

In the separate HARQ-ACK feedback, a UE transmits a HARQ-ACK for each TRP using a different uplink control channel (Physical Uplink Control Channel (PUCCH)). On the other hand, in the joint HARQ-ACK feedback, a UE transmits HARQ-ACKs for a plurality of TRPs using one PUCCH.

On the other hand, in the case of using the above-mentioned multi-TRP, when the separate HARQ-ACK feedback is applied, studies have not proceeded yet on whether or not to receive two or more DCI formats of a plurality of PDCCHs of which first symbols are received in the same symbol, and on how to determine PUCCH resources for the separate HARQ-ACK. When control of HARQ-ACK is properly not performed, in the case of using multi-TRP, it is not possible to suitably actualize spatial diversity gain, high rank transmission and the like, and there is the risk that increases in communication throughput are suppressed.

Therefore, in the present disclosure, it is an object to provide a user terminal and radio communication method for enabling HARQ-ACK control to be suitably performed also in the case of using multi-TRP.

### Means for Solving the Problem

Aspects of the present invention are provided in the independent claims and further detailed in the dependent claims.

The scope of the present invention is defined by the scope of the appended claims.

### Advantageous Effect of the Invention

According to one aspect of the present disclosure, it is possible to suitably perform HARQ-ACK control also in the case of using multi-TRP.

### Brief Description of Drawings

FIGs. 1A to 1D are diagrams showing one example of multi-TRP scenarios;
FIG. 2 is a diagram showing one example of the case that is not expected in Rel-15 NR;
FIGs. 3A and 3B are diagrams showing one example of assumption about detection of DCI formats in Embodiment 1-1;
FIGs. 4A and 4B are diagrams showing one example of assumption about detection of DCI formats in Embodiment 1-2;
FIGs. 5A and 5B are diagrams showing one example of assumption about detection of DCI formats in Embodiment 1-3;
FIG. 6 is a diagram showing one example of numbering of DAI in Embodiment 2-1;
FIG. 7 is a diagram showing one example of numbering of DAI in Embodiment 2-2;
FIG. 8 is a diagram showing one example of numbering of DAI in Embodiment 2-3;
FIG. 9 is a diagram showing one example of a "last DCI format" in Embodiment 3-1;
FIG. 10 is a diagram showing one example of a "last DCI format" in Embodiment 3-2;
FIG. 11 is a diagram showing one example of a "last DCI format" in Embodiment 3-3;
FIGs. 12A and 12B are diagrams showing one example of assumption about detection of DCI formats in other Embodiments;
FIGs. 13A and 13B are diagrams showing another example of assumption about detection of DCI formats in the other Embodiments.
FIG. 14 is a diagram showing one example of a schematic configuration of a radio communication system according to one Embodiment;
FIG. 15 is a diagram showing one example of a configuration of a base station according to one Embodiment;
FIG. 16 is a diagram showing one example of a configuration of a user terminal according to one Embodiment; and
FIG. 17 is a diagram showing one example of hardware configurations of the base station and user terminal according to one Embodiment.

### Best Mode for Carrying Out the Invention

### (Multi-TRP)

In NR, it is studied that one or a plurality of transmission/reception points (Transmission/Reception Point (TRP)) (multi-TRP) performs DL transmission to a UE, using one or a plurality of panels (multi-panel). Further, it is studied that the UE performs UL transmission to one or a plurality of TRPs.

In addition, a plurality of TRPs may correspond to the same cell Identifier (ID), or may correspond to different cell IDs. The cell ID may a physical cell ID or may be a virtual cell ID.

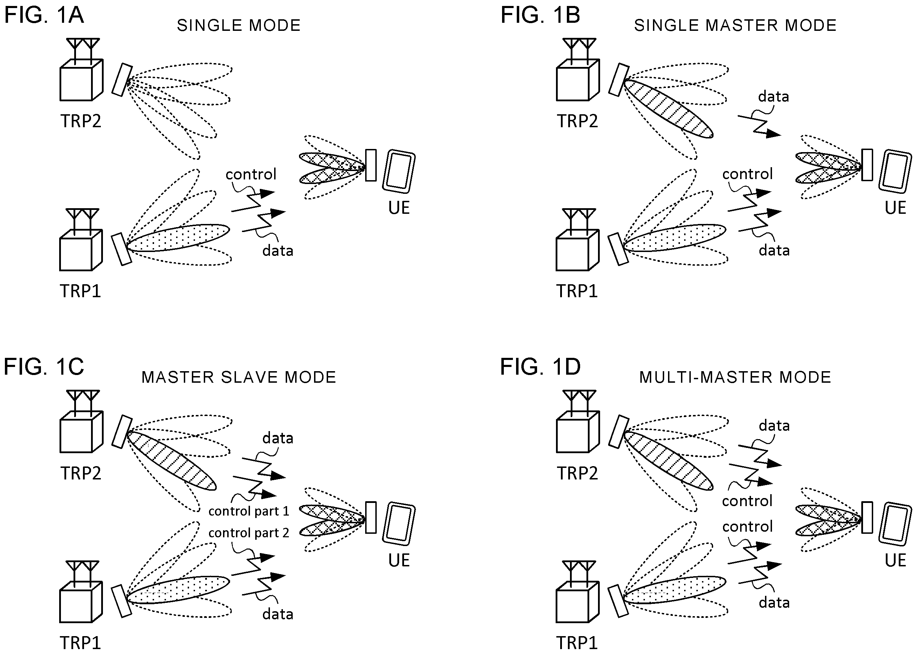

FIGs. 1A to 1D are diagrams showing one example of multi-TRP scenarios. In these examples, it is assumed that each TRP is capable of transmitting four different beams, but the invention is not limited thereto.

FIG. 1A shows one example of the case (which may be called a single mode, single TRP, etc.) where only one TRP (TRP 1 in this example) among multi-TRP performs transmission to a UE. In this case, the TRP 1 transmits both of a control signal (PDCCH) and a data signal (PDSCH) to the UE.

FIG. 1B shows one example of the case (which may be called a single master mode) where only one TRP (TRP 1 in this example) among multi-TRP transmits a control signal to a UE, and the multi-TRP transmits data signals. Based on one downlink control information (DCI), the UE receives each PDSCH transmitted from the multi-TRP.

FIG. 1C shows one example of the case (which may be called a master slave mode) where each of multi-TRP transmits a part of a control signal to a UE, and the multi-TRP transmits data signals. A TRP 1 may transmit a part 1 of the control signal (DCI), and a TRP 2 may transmit a part 2 of the control signal (DCI). The part 2 of the control signal may be dependent on the part 1. Based on these parts of the DCI, the UE receives each PDSCH transmitted from the multi-TRP.

FIG. 1D shows one example of the case (which may be called a multi-master mode) where each of multi-TRP transmits a different control signal to a UE, and the multi-TRP transmits data signals. A TRP 1 may transmit a first control signal (DCI), and a TRP 2 may transmit a second control signal (DCI). Based on these pieces of DCI, the UE receives each PDSCH transmitted from the multi-TRP.

In the case of scheduling a plurality of PDSCHs (which may be called multiple PDSCH) from multi-TRP using one DCI as shown in FIG. 1B, the DCI may be called single DCI (single PDCCH). Further, in the case of scheduling a plurality of PDSCHs from multi-TRP using a plurality of pieces of DCI respectively as shown in FIG. 1D, the plurality of pieces of DCI may be called multi-DCI (multiple PDCCH).

According to such multi-TRP scenarios, it is possible to perform more flexible transmission control using channels of good quality.

Each TRP of the multi-TRP may transmit a respective different code word (Code Word (CW)) and different layer. As one aspect of multi-TRP transmission, Non-Coherent Joint Transmission (NCJT) is studied.

In NCJT, for example, the TRP 1 modulates a first code word to map, performs layer mapping on the first number of layers (e.g., 2 layers) using first precoding, and transmits a first PDSCH. Further, the TRP 2 modulates a second code word to map, performs layer mapping on the second number of layers (e.g., 2 layers) using second precoding, and transmits a second PDSCH.

In addition a plurality of PDSCHs (multiple PDSCH) subjected to NCJT may be defined to overlap partially or completely with respect to at least one of the time and frequency domains. In other words, at least one of time and frequency resources may overlap in the first PDSCH from the TRP 1 and the second PDSCH from the TRP 2.

These first and second PDSCHs are assumed to be not in a Quasi-Co-Location (QCL) relationship (not quasi-co-located). Reception of multiple PDSCH may be read with simultaneous reception of PDSCHs that are not QCL-Type-D.

### (HARQ-ACK of multi-TRP)

In addition, as Hybrid Automatic Repeat reQuest ACKnowledgement (HARQ-ACK) feedback in response to multiple PDSCHs, studied are separate HARQ-ACK feedback and joint HARQ-ACK feedback.

The separate HARQ-ACK feedback (which may be called separate HARQ-ACK) corresponds to feedback where a UE transmits the HARQ-ACK for each TRP using different uplink control channel (Physical Uplink Control Channel (PUCCH))/uplink shared channel (Physical Uplink Shared Channel (PUCCH)) resources. The plurality of PUCCH/PUSCH resources may overlap (may be transmitted simultaneously), or may not overlap.

When the separate HARQ-ACK is used, it is possible to perform independent HARQ-ACK transmission for each TRP. Also in the case where a backhaul delay is large between TRPs (e.g., TRPs are connected by non ideal transmission), a delay of HARQ is not increased.

The joint HARQ-ACK feedback (which may be called joint HARQ-ACK) corresponds to feedback where a UE transmits the HARQ-ACK for each TRP in same PUCCH/PUSCH resources.

When the joint HARQ-ACK is used, since one PUCCH/PUSCH transmission is sufficient, it is possible to decrease resource overhead. Further, when a backhaul delay between TRPs is small (e.g., TRPs are connected by ideal backhaul), it is possible to deliver the HARQ-ACK transmitted to one of the TRPs to the other TRP with a low delay.

In addition, the PUCCH/PUSCH may mean at least one of the PUCCH and PUSCH (hereinafter, "A/B" may similarly be read with "at least one of A and B".)

Unless otherwise specified, the HARQ-ACK in the present disclosure is capable of being read with both the separate HARQ-ACK and the joint HARQ-ACK.

One or a plurality of pieces of DCI for scheduling multiple PDSCHs may include a field of a PUCCH resource indicator (PRI). The PRI corresponds to information for designating resources to transmit a HARQ-ACK in response to a PDSCH, and may be called an ACK/NACK Resource Indicator (ARI).

Based on the PRI, the UE may judge PUCCH resources to transmit the HARQ-ACK in response to the above-mentioned multiple PDSCH.

### (HARQ-ACK codebook)

In NR, a UE may transmit HARQ-ACK feedback using one PUCCH resource, on a HARQ-ACK codebook basis comprised of bits of one or more receipt confirmation information (e.g., Hybrid Automatic Repeat reQuest ACKnowledgement (HARQ-ACK)). The HARQ-ACK bit may be called HARQ-ACK information, HARQ-ACK information bit and the like.

Herein, the HARQ-ACK codebook may be configured by including bits for HAQR-ACK on a basis of at least one of a time domain (e.g., slot), frequency domain (e.g., Component Carrier (CC)), spatial domain (e.g., layer), Transport Block (TB), and a Code Block Group (CBG) constituting the TB. The HAQR-ACK codebook may be called simply a codebook.

In addition, the number of bits (size) and the like included in the HARQ-ACK codebook may be determined semi-statically or dynamically. The HARQ-ACK codebook with the size determined semi-statically may be called a semi-static HARQ-ACK codebook, Type-1 HARQ-ACK codebook and the like. The HARQ-ACK codebook with the size determined dynamically may be called a dynamic HARQ-ACK codebook, Type-2 HARQ-ACK codebook and the like.

Whether to use the Type-1 HARQ-ACK codebook or the Type-2 HARQ-ACK codebook may be configured on the UE using higher layer signaling (e.g., pdsch-HARQ-ACK-Codebook).

In the case of the Type-1 HARQ-ACK codebook, in a given range (e.g., range configured based on a higher layer parameter), irrespective of the presence or absence of PDSCH scheduling, the UE may transmit, as feedback, a HARQ-ACK bit in response to a PDSCH candidate (or PDSCH occasion) corresponding to the given range.

The given range may be determined based on at least one of a set of given periods (e.g., set of the given number of occasions for PDSCH reception as candidates or the given number of monitoring occasions of the PDCCD), the number of CCs configured or activated for the UE, the number of TBs (the number of layers or rank), the number of CBGs per TB, and the presence or absence of application of spatial bundling. The given range is also called a HARQ-ACK window, HARQ-ACK bundling window, HARQ-ACK feedback window and the like.

In the Type-1 HARQ-ACK codebook, within the given range, even in the case where scheduling of a PDSCH for the UE is absent, the UE reserves a bit in response to the PDSCH in the codebook. In the case where the UE determines that the PDSCH is actually not scheduled, the UE is capable of transmitting the bit as a NACK bit as feedback.

On the other hand, in the case of the Type-2 HARQ-ACK codebook, in the above-mentioned given range, the UE may transmit a HARQ-ACK bit in response to a scheduled PDSCH as feedback.

Specifically, the UE may determine the number of bits of the Type-2 HARQ-ACK codebook based on a given field (e.g., Downlink Assignment Indicator (Index) (DAI) field) in DCI. The DAI field may include a Counter DAI (C-DAI)) and a Total DAI (T-DAI).

The C-DAI may indicate a counter value of downlink transmission (PDSCH, data, TB) scheduled within a given period. For example, the C-DAI in DCI for scheduling data within the given period may indicate the number counted first in the frequency domain (e.g., CC) and subsequently time domain within the given period. For example, with respect to one or more pieces of DCI included in a given period, the C-DAI may correspond to a value obtained by counting PDSCH reception or Semi-Persistent Scheduling (SPS) release in ascending order of serving cell indexes and next in ascending order of PDCCH monitoring occasions.

In other words, the C-DAI may mean the cumulative number of pairs of {serving cell, PDCCH monitoring occasion} that corresponds to each data, up to the current serving cell and the current PDCCH monitoring occasion.

The T-DAI may indicate a total value (total number) of items of data scheduled in a given period. For example, the T-DAI in DCI for scheduling data in some time unit (e.g., PDCCH monitoring occasion) within the given period may indicate the total number of items of data scheduled up to the time unit (also called a point, timing, etc.) within the given period.

In other words, the T-DAI may mean a value updated for each PDCCH monitoring occasion which is the total number of pairs of {serving cell, PDCCH monitoring occasion} that corresponds to each data, up to the current PDCCH monitoring occasion.

In addition, in Rel-15 NR, a UE is specified not to expect to detect two or more DCI formats of a plurality of PDCCHs (in other words, starting in a same symbol) of which first symbols are received in the same symbol in some slot which are the two or more DCI formats for scheduling PDSCH reception or SPS PDSCH release in a same cell, and for indicating corresponding HARQ-ACK transmission in a same slot.

In addition, the two or more DCI formats may be the same formats, or may be different formats.

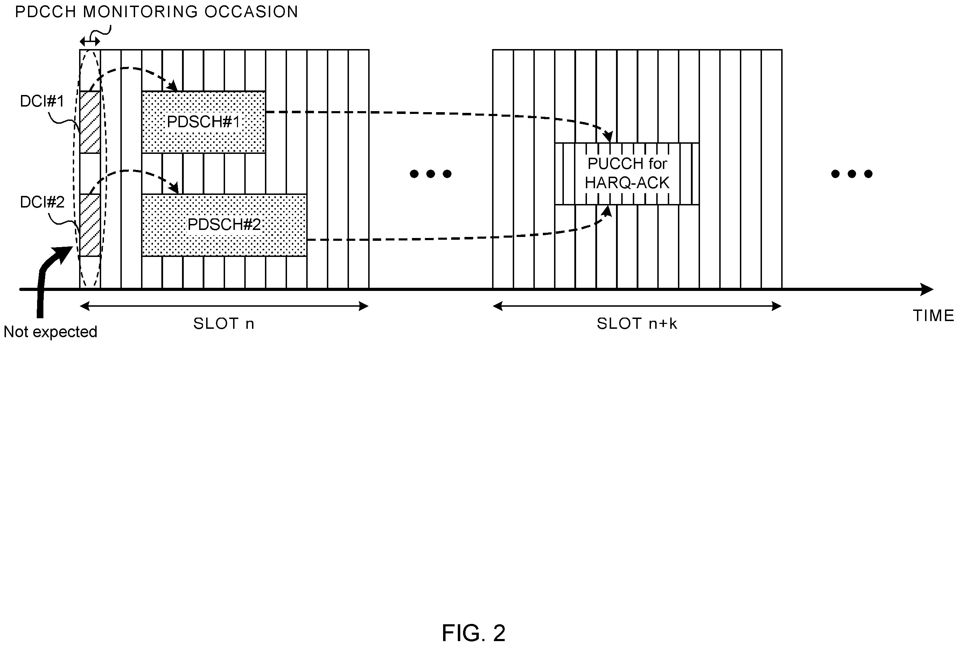

FIG. 2 is a diagram showing one example of the case that is not expected in Rel-15 NR. In this example, DCI #1 transmitted in a symbol #0 of a slot n schedules a PDSCH #1, and PUCCH resources for a HARQ-ACK in response to the PDSCH #1 are scheduled in a slot n+k. Further, DCI #2 transmitted in the symbol #0 of the same slot n schedules a PDSCH #2, and PUCCH resources for a HARQ-ACK in response to the PDSCH #2 are scheduled in the slot n+k.

In addition, the PDSCHs #1 and #2 may start from the same symbol, or may start from different symbols (the same in subsequent drawings).

Transmission timing (which may be called PDSCH-to-HARQ feedback timing, K1, etc.) of a HARQ-ACK in response to a PDSCH may be identified by a PDSCH-to-HARQ feedback timing indicator field included in DCI (e.g., DCI format 1_0/1_1) for scheduling the PDSCH. When it is assumed that a last slot for receiving the PDSCH is n, it is meant that the UE transmits the HARQ-ACK in response to the PDSCH in a slot n+K1.

In addition, designation of the above-mentioned PDSCH-to-HARQ feedback timing is not limited to a slot basis, and for example, may be performed on a subslot-by-subslot basis.

The UE in conformity with Rel-15 NR does not expect to simultaneously detect the DCI #1 and DCI #2 of FIG. 1.

Further, in Rel-15 NR, PUCCH resources for transmitting a HARQ-ACK in some slot are defined to be determined based on a PRI included in a last DCI format in DCI formats (e.g., DCI formats 1_0/1_1) having the PDSCH-to-HARQ feedback timing indicator field indicative of PUCCH transmission of the slot.

In Rel-15 NR, the "last DCI format" means a last (corresponding to a highest index) DCI format, in the case of assigning indexes in ascending order across serving cells for the same PUCCH monitoring occasion, and further assigning indexes in ascending order across indexes of PUCCH monitoring occasions, to detected DCI formats corresponding to PUCCH transmission of the same slot.

On the other hand, in the case of using the above-mentioned multi-TRP, when the separate HARQ-ACK feedback is applied, studies have not proceeded on whether or not to receive two or more DCI formats of a plurality of PDCCHs of which first symbols are received in the same symbol as described above, and on how to determine PUCCH resources for the separate HARQ-ACK.

For example, for multi-TRP, it is studied that a UE is notified of an index (which may be called an index associated with the TRP, TRP index, etc.) for each TRP, however, studies have not proceeded sufficiently yet on how to use notification.

When control of HARQ-ACK is properly not performed, it is not possible to suitably actualize spatial diversity gain, high rank transmission and the like in the case of using multi-TRP, and there is the risk that increases in communication throughput are suppressed.

Therefore, the inventors of the present invention conceived HARQ-ACK control capable of supporting the case of using multi-TRP.

Embodiments according to the present disclosure will be described below in detail with reference to drawings. Radio communication methods according to respective Embodiments may be applied alone, or may be applied in combination.

In addition, in the present disclosure, a panel, Uplink (UL) transmission entity, TRP, spatial relation, control resource set (COntrol Resource SET (CORESET)), PDSCH, code word, base station, given antenna port (e.g., DeModulation Reference Signal (DMRS) port), given antenna port group (e.g., DMRS port group), given group (e.g., Code Division Multiplexing (CDM) group), given reference signal group, CORESET group) and the like may be read with one another.

Further, a panel Identifier (ID) and a panel may be read with each other. In other words, a TRP ID and the TRP, CORESET group ID and CORESET group, or the like may be read with each other.

Furthermore, the "group" in the present disclosure may be read with grouping, sequence, list, set and the like.

Still furthermore, in the present disclosure, NCJT, NJCT usingmulti-TRP, multiple PDSCH using NCJT, multiple PDSCH, a plurality of PDSCHs from multi-TRP and the like may be read with one another.

The following PUCCH may be read with a PUSCH.

In addition, in the present disclosure, an index for each TRP, TRP index, higher layer signaling index for each CORESET, index for each CORESET, CORESET index, CORESET-related index, CORESET group ID, index related to TRP and HARQ-ACK (PUCCH), index related to CORESET and HARQ-ACK (PUCCH), codebook-related index, codebook index and the like may be read with one another.

Further, "two DCI formats" in thepresent disclosure may mutually be read with "two or more DCI formats".

### (Radio communication method)

### <Embodiment 1>

Embodiment 1 will describe the case of allowing and the case of not allowing detection of two DCI formats of a plurality of PDCCHs of which first symbols are received in a same symbol in some slot which are the two DCI formats for scheduling PDSCH reception or SPS PDSCH release in a same cell, and for indicating corresponding HARQ-ACK transmission in a same slot.

Embodiment 1 is broadly divided into the following three cases:
(Embodiment 1-1): the separate HARQ-ACK codebook is identified based on a CORESET group ID;
(Embodiment 1-2): the separate HARQ-ACK codebook is identified based on a subslot index; and
(Embodiment 1-3); the separate HARQ-ACK codebook is identified based on the CORESET group ID and codebook index.

In addition, in the present disclosure, the subslot index may be read with a subslot index in layer 1 (physical layer), subslot relation information and the like.

A UE maybe notified of a correspondence relationship between a PUCCH (or CORESET or DCI format) and a CORESET group ID, using higher layer signaling, physical layer signaling (e.g., DCI), or a combination thereof. For example, the UE may be configured for an index (e.g., PUCCH resource ID) related to the PUCCH, or a CORESET group ID related to a CORSET ID. The UE may determine a CORESET group corresponding to received DCI (PDCCH), based on the aforementioned correspondence relationship.

In addition, the correspondence relationship between the TRP and the CORESET group may be configured on the UE by higher layer signaling, or may be beforehand defined by specifications.

In addition, in the present disclosure, for example, the higher layer signaling may be one of Radio Resource Control (RRC) signaling, Medium Access Control (MAC) signaling and broadcast information, or a combination thereof.

For example, the MAC signaling may use MAC Control Element (MAC CE), MAC Protocol Data Unit (PDU) and the like. For example, the broadcast information may be Master Information Block (MIB), System Information Block (SIB), RemainingMinimum System Information (RMSI), Other System Information (OSI) and the like.

The UE may be configured for different scramble IDs in a first CORESET group and a second CORESET group. In this case, In CORESETs belonging to the first CORESET group and CORESETs belonging to the second CORESET group, also when time/frequency resources overlap, based on the scramble ID that corresponds to the CORESET, the UE is capable of properly determining the CORESET group (by extension, corresponding TRP) that corresponds to the CORESET for detecting the DCI.

The UE may be notified of a correspondence relationship between a PUCCH (or CORESET or DCI format) and a subslot of the corresponding PUSCH, using higher layer signaling, physical layer signaling, or a combination thereof. For example, the UE may be configured for an index (e.g., PUCCH resource ID) related to the PUCCH, or a CORESET group ID related to a CORSET ID. The UE may determine a CORESET group corresponding to received DCI (PDCCH), based on the aforementioned correspondence relationship.

For example, it is assumed that the UE is configured for n (n is an integer) symbols from the beginning of a slot as a subslot #0, and further configured for the other symbols (e.g., 14-n symbols from the end) as a subslot #1. In addition, such a subslot configuration (symbols that correspond to a subslot) may be configured by higher layer signaling, or may be beforehand defined by specifications.

In the case of detecting DCI for scheduling a PDSCH (by extension, PUCCH in response to the PDSCH), when the PUCCH resource is included in the subslot #1, the UE may assume to transmit the PUCCH to a first TRP. Further, when the PUCCH resource is included in the subslot #2, the UE may assume to transmit the PUCCH to a second TRP. In addition, a correspondence relationship between the TRP and the subslot may be configured by higher layer signaling, or may be beforehand defined by specifications.

In the case where the UE is indicated to transmit the separate HARQ-ACK in the same slot, the UE may control to transmit a PUCCH of an ith TRP in an ith subslot. The number of subslots contained in a slot may be determined based on the number of TRPs (e.g., which may be the same as the number of TRPs). The number of TRPs may be "2", or "3" or more.

In addition, a correspondence relationship between the TRP and PUCCH transmission timing (e.g., subslot index) may be configured by higher layer signaling.

### [Embodiment 1-1]

In the case of Embodiment 1-1, the UE may allow detection of two DCI formats meeting all of the following Conditions 1 to 3, or does not expect to detect two DCI formats meeting all of the following Conditions 1, 2 and 4:
(Condition 1) two DCI formats of a plurality of PDCCHs of which first symbols are received in the same symbol in some slot;
(Condition 2) two DCI formats for scheduling PDSCH reception of the same cell or SPS PDSCH release, and for indicating corresponding HARQ-ACK transmission in the same slot;
(Condition 3) each of the two DCI formats is related to a different TRP (e.g., different CORESET group, different CORESET group ID); and
(Condition 4) the two DCI formats are related to the same TRP (e.g., same CORESET, same CORESET group ID) .

In addition, the Condition 1 may be read with "two DCI formats of a plurality of PDCCHs received in at least one overlapping symbol in some slot".

In addition, meeting the Condition 3 may be read with not meeting the Condition 4, or meeting the Condition 4 may be read with not meeting the Condition 3.

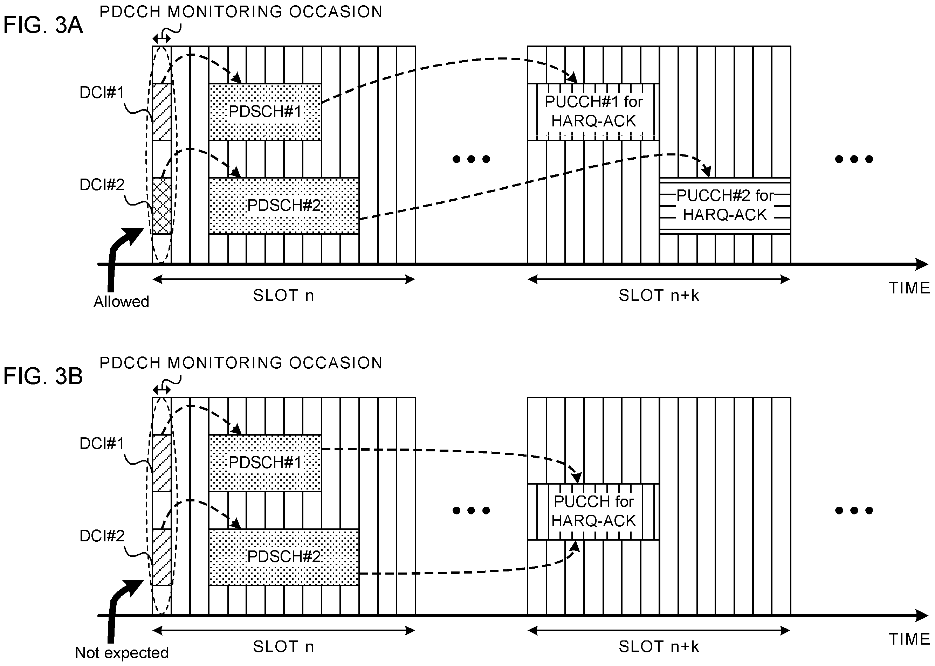

FIGs. 3A and 3B are diagrams showing one example of assumption about detection of DCI formats in Embodiment 1-1. This example is similar to the example of FIG. 2, and already explained descriptions are redundant and are not explained.

In FIG. 3A, DCI #1 is related to a CORESET group #1, and DCI #2 is related to a CORESET group #2. Since the DCI #1 and #2 in FIG. 3A corresponds to two DCI formats meeting all of the above-mentioned Conditions 1 to 3, the UE is configured to allow detection (reception) of the formats. Further, the UE is configured to transmit a PUCCH #1 corresponding to the DCI #1 and a PUCCH #2 corresponding to the DCI #2 to respective different TRPs (e.g., TRPs corresponding to the CORESET group).

In addition, the PUCCHs #1 and #2 of FIG. 3A illustrate the example where time and frequency resources do not overlap, but are not limited thereto. At least a part of the time and frequency resources overlap.

In FIG. 3B, both the DCI #1 and #2 is related to the CORESET group #1. Since the DCI #1 and #2 in FIG. 3B corresponds to two DCI formats meeting all of the above-mentioned Conditions 1, 2 and 4, the UE does not allow (or expect) detection (reception) of the formats.

In addition, as shown in FIG. 3B, the UE is configured to assume that PUCCH resources corresponding to the same CORESET group are the same.

According to Embodiment 1-1, since it is possible to allow reception of two DCI formats based on the CORESET group, it is possible to ensure flexibility of scheduling.

### [Embodiment 1-2]

In the case of Embodiment 1-2, the UE is configured to allow detection of two DCI formats meeting all of the above-mentioned Condition 1 and the following Condition 5, or does not expect to detect two DCI formats meeting all of the above-mentioned Condition 1 and the following Condition 6:
(Condition 5) two DCI formats for scheduling PDSCH reception of the same cell or SPS PDSCH release, and for indicating corresponding HARQ-ACK transmission in different subslots; and
(Condition 6) two DCI formats for scheduling PDSCH reception of the same cell or SPS PDSCH release, and for indicating corresponding HARQ-ACK transmission in the same subslot.

In addition, meeting the Condition 5 may be read with not meeting the Condition 6, or meeting the Condition 6 may be read with not meeting the Condition 5.

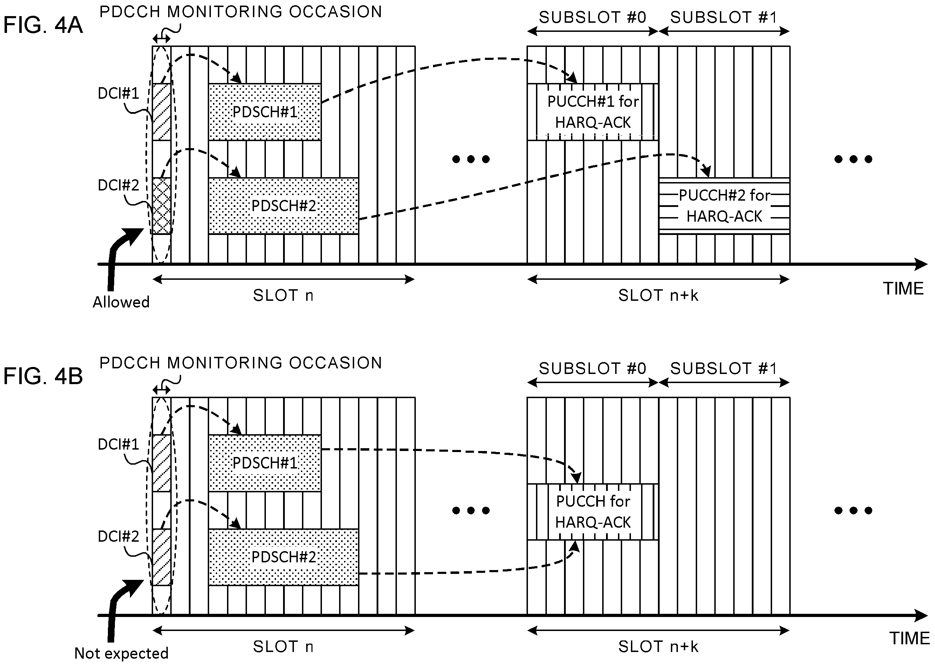

FIGs. 4A and 4B are diagrams showing one example of assumption about detection of DCI formats in Embodiment 1-2. This example is similar to the example of FIG. 1, and already explained descriptions are redundant and are not explained.

In FIG. 4A, DCI #1 designates a subslot #0 as PUCCH resources for corresponding HARQ-ACK transmission, and DCI #2designates a subslot #1 as PUCCH resources for corresponding HARQ-ACK transmission. Since the DCI #1 and #2 in FIG. 4A corresponds to two DCI formats meeting all of the above-mentioned Conditions 1 and 5, the UE may allow detection (reception) of the formats. Further, the UE may transmit a PUCCH #1 corresponding to the DCI #1 and a PUCCH #2 corresponding to the DCI #2 to respective different TRPs (e.g., TRPs that correspond to the CORESET group) .

In FIG. 4B, both of the DCI #1 and DCI #2 designates the same slot #0 as PUCCH resources for corresponding HARQ-ACK transmission. Since the DCI #1 and #2 in FIG. 4B corresponds to two DCI formats meeting all of the above-mentioned Conditions 1 and 6, the UE may not allow (or expect) detection (reception) of the formats.

In addition, as shown in FIG. 4B, the UE may assume that PUCCH resources that correspond to the same subslot are the same.

Further, in this example and other drawings, the example is shown where the subslot contains 7 symbols, but a length of the subslot is not limited thereto. The position of the subslot boundary is not limited to the center of the slot.

According to Embodiment 1-2, since it is possible to allow reception of two DCI formats based on the subslot of the corresponding PUCCH, it is possible to ensure flexibility of scheduling.

### [Embodiment 1-3]

In the case of Embodiment 1-3, the UE may allow detection of two DCI formats meeting all of the above-mentioned 1, 3 and 6. On the other hand, the UE may not expect to detect two DCI formats meeting all of the above-mentioned 1, 4 and 6.

Further, in the case of Embodiment 1-3, the UE may allow or may not expect detection of two DCI formats meeting all of the above-mentioned Conditions 1, 3 and 5. Furthermore, the UE may allow or may not expect detection of two DCI formats meeting all of the above-mentioned Conditions 1, 4 and 5.

In other words, in the case of Embodiment 1-3, as long as two DCI formats are the two DCI formats meeting all of the above-mentioned 1, 3 and 6, the UE may allow detection, and may not expect to detect other two DCI formats meeting the Condition 1.

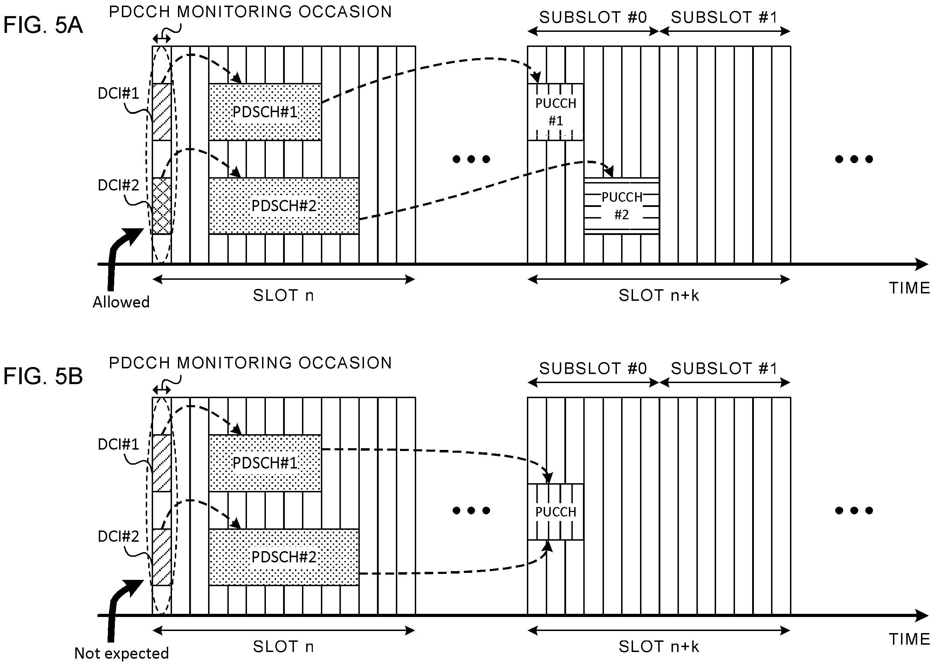

FIGs. 5A and 5B are diagrams showing one example of assumption about detection of DCI formats in Embodiment 1-3. This example is similar to the example of FIG. 1, and already explained descriptions are redundant and are not explained.

In FIG. 5A, DCI #1 is related to a CORESET group #1, and DCI #2 is related to a CORESET group #2. On the other hand, both of the DCI #1 and DCI #2 designates the same subslot #0 as PUCCH resources for corresponding HARQ-ACK transmission. The DCI #1 and #2 of FIG. 4A corresponds to two DCI formats meeting all of the above-mentioned Conditions 1, 3 and 6, the UE may allow detection (reception) of the formats.

Further, the UE may transmit a PUCCH #1 corresponding to the DCI #1 and a PUCCH #2 corresponding to the DCI #2 to mutual different TRPs (e.g., TRPs that correspond to the CORESET group). In the PUCCH #1 corresponding to the TRP #1 and the PUCCH #2 corresponding to the TRP #2 included in the same subslot #0, as shown in FIG. 5A, time and frequency resources are assumed not to overlap, (in other words, each PUCCH resource may be associated with the resource that does not overlap for each TRP in the subslot), or at least a part of the time and frequency resources may overlap.

In FIG. 5B, both of the DCI #1 and #2 is related to the CORESET group #1. Further, both of the DCI #1 and #2 designates the same slot #0 as PUCCH resources for corresponding HARQ-ACK transmission. Since the DCI #1 and #2 in FIG. 5B corresponds to two DCI formats meeting all of the above-mentioned Conditions 1, 4 and 6, the UE may not allow (or expect) detection (reception) of the formats.

According to Embodiment 1-3, since it is possible to allow reception of two DCI formats for indicating the PUCCH corresponding to the same subslot that is not allowed in Embodiment 1-2, it is possible to ensure flexibility of scheduling.

### <Embodiment 2>

Embodiment 2 relates to a method of counting DAIs included in DCI.

Embodiment 2 is broadly divided into the following three cases:
(Embodiment 2-1): the separate HARQ-ACK codebook is identified based on a CORESET group ID;
(Embodiment 2-2): the separate HARQ-ACK codebook is identified based on a subslot index; and
(Embodiment 2-3); the separate HARQ-ACK codebook is identified based on the CORESET group ID and codebook index.

In Embodiment 2, the UE classifies detected PDCCHs related to scheduling into groups (which may be called PDCCH groups). Then, the UE may assume that values of the C-DAI and T-DAI are determined according to a given rule within one PDCCH group. In other words, a value of each DAI is counted up independently for each PDCCH group. For example, the C-DAI of a PDCCH group 0 is related to data scheduled by DCI of the PDCCH group 0, and may be assumed not to be related to data scheduled by DCI of a PDCCH group 1. In addition, the given rule may be the same rule as above-mentioned Rel-15 NR.

In addition, the PDCCH related to scheduling may be a PDCCH related to at least one of DCI for scheduling a PDSCH, DCI for activating (triggering) a SPS PDSCH and DCI for indicating a SPS release.

Further, the PDCCH group may be read with the CORESET group.

### [Embodiment 2-1]

In the case of Embodiment 2-1, when the UE detects a PDCCH related to scheduling, based on a CORESET group ID associated with the PDCCH and a slot to transmit a HARQ-ACK in response to the PDCCH, the UE classifies the PDCCH into a group. For example, the UE may determine that a plurality of PDCCHs which is associated with the same CORESET group ID and for which the corresponding HARQ-ACKs is transmitted on the same slotbelongs to one PDCCH group.

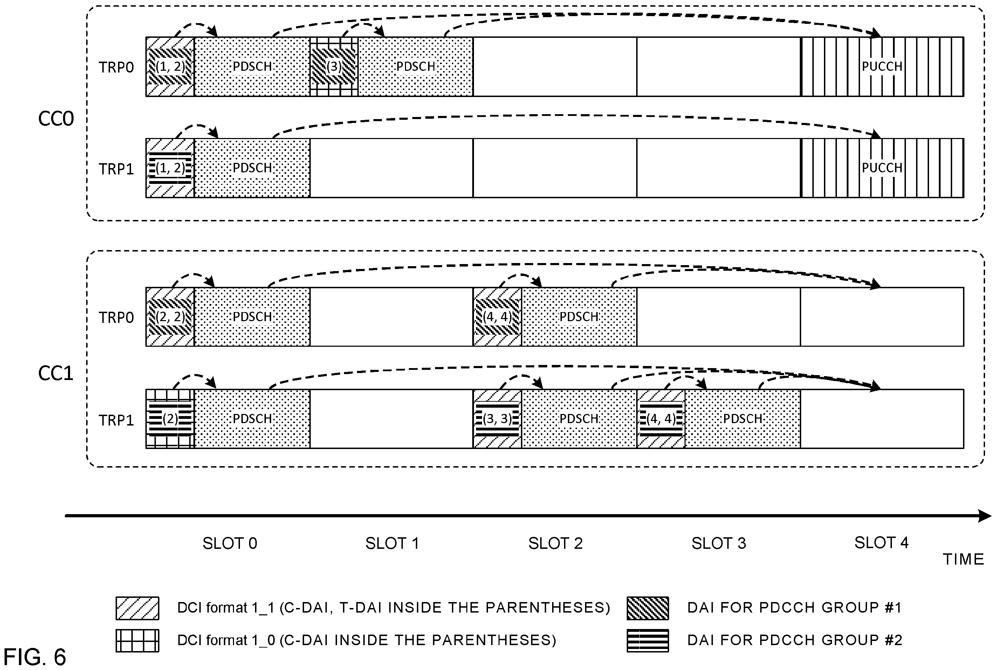

FIG. 6 is a diagram showing one example of numbering of the DAI in Embodiment 2-1. In this example, the UE is configured for two serving cells (CC0 and CC1). Further, the UE is configured to operate by multi-TRP (TRPs 0, 1) with respect to each cell.

In FIG. 6, the PDSCH scheduled by each DCI and the PUCCH in response to the PDSCH are indicated by respective dashed lines.

In a slot 0 of the CC0, the UE receives DCI format 1_1 from the TRP 0, and based on the DCI, receives the PDSCH. In a slot 1 of the CC0, the UE receives DCI format 1_0 from the TRP 0, and based on the DCI, receives the PDSCH.

In a slot 0 of the CC1, the UE receives DCI format 1_1 from the TRP 0, and based on the DCI, receives the PDSCH. In a slot 2 of the CC1, the UE receives DCI format 1_1 from the TRP 0, and based on the DCI, receives the PDSCH.

In this example, the DCI of each CC (CC0, CC1) transmitted in the TRP 0 is associated with a CORESET group ID 0, and corresponds to a PDCCH group #1. The UE may determine reception from the TRP 0 from the CORESET group ID 0.

In the slot 0 of the CC0, the UE receives DCI format 1_1 from the TRP 1, and based on the DCI, receives the PDSCH.

In the slot 0 of the CC1, the UE receives DCI format 1_0 from the TRP 1, and based on the DCI, receives the PDSCH. In each of slots 2 and 3 of the CC1, the UE receives DCI format 1_1 from the TRP 1, and based on the DCI, receives the PDSCH.

In this example, the DCI of each CC (CC0, CC1) transmitted in the TRP 1 is associated with a CORESET group ID 1, and corresponds to a PDCCH group #2. The UE may determine reception from the TRP 1 from the CORESET group ID 1.

In this example, it is assumed that PUCCHs corresponding to the DCI received in slots 0 to 3 are transmitted in a slot 4 of the CC0. In FIG. 6, the arrow extends from each PDSCH of the CC1 to the slot 4 that corresponds to the PUCCH of the CC1, and HARQ-ACKs in response to the PDSCHs are transmitted in the PUCCH of the CC0.

For example, the UE may transmit PUCCHs corresponding to the DCI of the PDCCH group #1 of slots 0 to 3 to the TRP 0 in the slot 4 of the CC0. The UE may transmit PUCCHs in response to the DCI of the PDCCH group #2 of slots 0 to 3 to the TRP 1 in the slot 4 of the CC0. In addition, the CC to transmit the PUCCH is not limited to the CC0, and may be the CC1 corresponding to configuration and the like.

FIG. 6 illustrates C-DAI and T-DAI that correspond to DCI format 1_1. For example, DCI format 1_1 corresponding to the TRP 0 of the slot 0 of the CC1 includes (C-TAI, T-DAI) = (1, 2). Further, the C-DAI corresponding to DCI format 1_0 is shown. For example, DCI format 1_0 corresponding to the TRP 0 of the slot 1 of the CC0 includes (C-DAI)=(3).

In this example and examples in subsequent drawings, the order (order of HARQ-ACK bits) for counting the C-DAI for each PDCCH group is order where the CC index is earlier (lower) and the PDCCH monitoring occasion is earlier (lower) as in Rel-15 NR, but is not limited thereto.

In addition, generally, a value of the DAI is expressed by applying modulo arithmetic (expressed by a remainder obtained by dividing an original value by a given value (e.g., 4) (i.e. expressed by original value mod given value). However, in the example of the present disclosure, in order to facilitate understanding, as shown in FIG. 6, the value is expressed without applying modulo arithmetic.

### [Embodiment 2-2]

In the case of Embodiment 2-2, when the UE detects a PDCCH related to scheduling, based on a subslot to transmit a HARQ-ACK in response to the PDCCH, the UE classifies the PDCCH into a group. For example, the UE may determine that a plurality of PDCCHs with the same slot to transmit the corresponding HARQ-ACK belongs to one group.

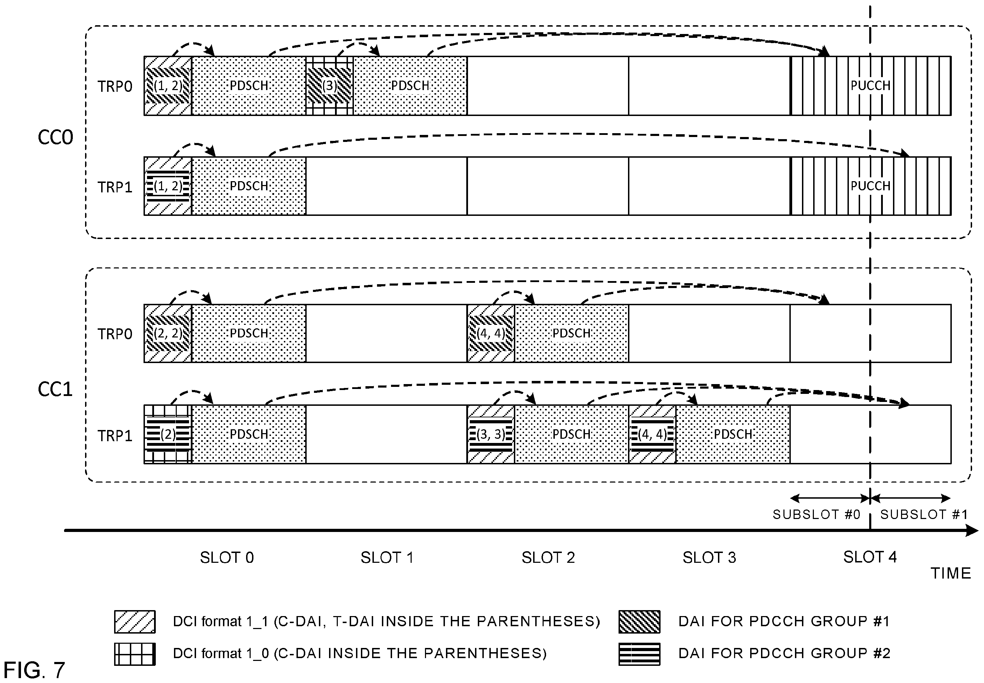

FIG. 7 is a diagram showing one example of numbering of DAI in Embodiment 2-2. This example is similar to FIG. 6, and with respect to the same respect, the description is not repeated. In this example, HARQ-ACK transmission timing may be controlled on a subslot basis, as a substitute for the slot basis as shown in FIG. 6.

In this example, the DCI of each CC (CCs0,1) transmitted in the TRP 0 indicates that a subslot to transmit a corresponding HARQ-ACK is a subslot #0 of a slot 4. The UE may determine that reception from the TRP 0 from a subslot index (#0) of HARQ-ACK transmission.

In this example, the DCI of each CC (CCs0,1) transmitted in the TRP 0 indicates that a subslot to transmit a corresponding HARQ-ACK is the subslot #0 of the slot 4, and these PDCCHs correspond to a PDCCH group #1. The UE may determine that reception from the TRP 0 from the subslot index (#0) of HARQ-ACK transmission.

In this example, the DCI of each CC (CCs0,1) transmitted in the TRP 1 indicates that a subslot to transmit a corresponding HARQ-ACK is a subslot #1 of the slot 4, and these PDCCHs correspond to a PDCCH group #2. The UE may determine that reception from the TRP 1 from the subslot index (#1) of HARQ-ACK transmission.

### [Embodiment 2-3]

In the case of Embodiment 2-3, when the UE detects a PDCCH related to scheduling, based on a CORESET group ID associated with the PDCCH, and a subslot to transmit a HARQ-ACK in response to the PDCCH, the UE classifies the PDCCH into a group. For example, the UE may determine that a plurality of PDCCHs with the same subslot to transmit the corresponding HARQ-ACK belongs to one PDCCH group.

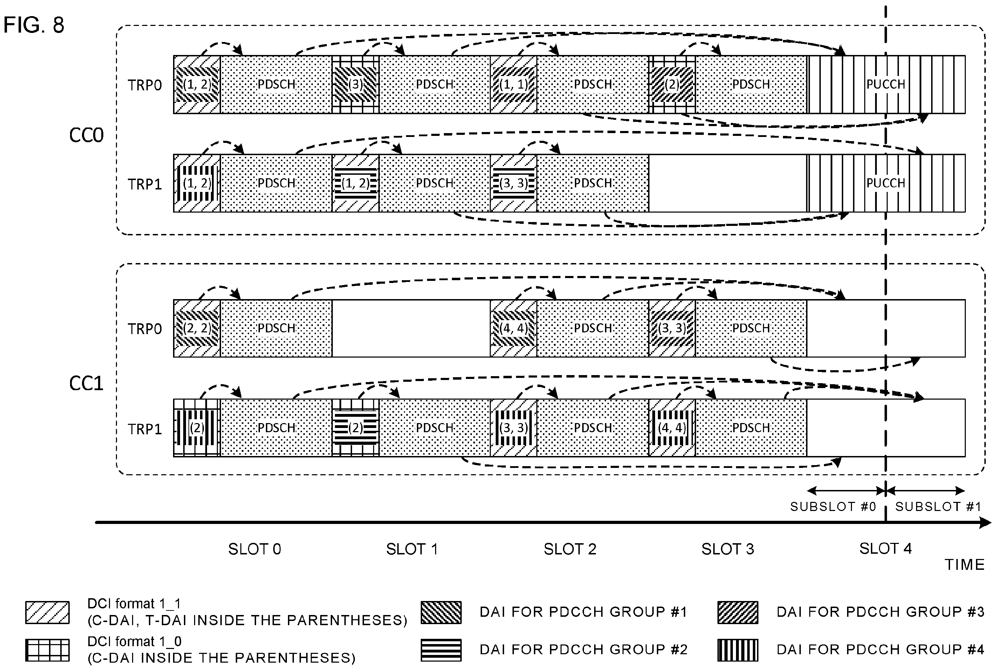

FIG. 8 is a diagram showing one example of numbering of DAI in Embodiment 2-3. This example is similar to FIGs. 6 and 7, and with respect to the same respect, the description is not repeated.

In this example, each DCI of each CC (CCs0, 1) transmitted in the TRP 0 is associated with a CORESET group ID 0. Further, the DCI of each CC (CCs0, 1) transmitted in the TRP 1 is associated with a CORESET group ID 1.

In this example, the DCI (PDCCH) indicative of a subslot #0 related to the CORSET group ID 0 corresponds to a PDCCH group #1. Further, the DCI (PDCCH) indicative of the subslot #0 related to the CORSET group ID 1 corresponds to a PDCCH group #2.

Then, the DCI (PDCCH) indicative of a subslot #1 related to the CORSET group ID 0 corresponds to a PDCCH group #3. Further, the DCI (PDCCH) indicative of the subslot #1 related to the CORSET group ID 1 corresponds to a PDCCH group #4.

According to Embodiment 2 as described above, it is possible to properly grasp the DAI included in the DCI.

### <Embodiment 3>

Embodiment 3 relates to a method of determining PUCCH resources.

Embodiment 3 is broadly divided into the following three cases:
(Embodiment 3-1): the separate HARQ-ACK codebook is identified based on a CORESET group ID;
(Embodiment 3-2): the separate HARQ-ACK codebook is identified based on a subslot index; and
(Embodiment 3-3); the separate HARQ-ACK codebook is identified based on the CORESET group ID and a codebook index.

In Embodiment 3, corresponding PUCCH resources may be determined for each PDCCH group described in Embodiment 2. In this case, the PUCCH resource corresponding to some PDCCH group may be determined based on the PRI included in a "last DCI format" different from the definition of Rel-15 NR.

As described in Embodiment 1, in allowing detection of two or more DCI formats of a plurality of PDCCHs of which first symbols are received in the same symbol, in the definition of the "last DCI format" of existing Rel-15 NR, it is considered that the "last DCI format" is not capable of being identified as only one, and that PUCCH resources are not determined distinctly, but by using Embodiment 3, such a problem does not occur.

### [Embodiment 3-1]

In the case of Embodiment 3-1, the UE may determine PUCCH resources to transmit the HARQ-ACK in some slot based on the PRI included in the last DCI format among DCI formats (e.g., DCI formats 1_0/1_1) indicative of PUCCH transmission of the slot.

Among detected DCI formats corresponding to PUCCH transmission of the same slot, the "last DCI format" may mean a last (that corresponds to a highest index) DCI format in the case of assigning indexes to DCI formats corresponding to the same CORESET group (i.e., the same PDCCH group) in ascending order across serving cells with respect to the same PUCCH monitoring occasion, and further, assigning indexes in ascending order across indexes of the PUCCH monitoring occasion.

In addition, time resources (e.g., slot) of the PUCCH corresponding to the DCI may be determined based on a value of the PDSCH-to-HARQ feedback timing indicator field of the DCI, may be determined based on a value of another field, may be determined based on higher layer signaling, or may be determined based on specifications.

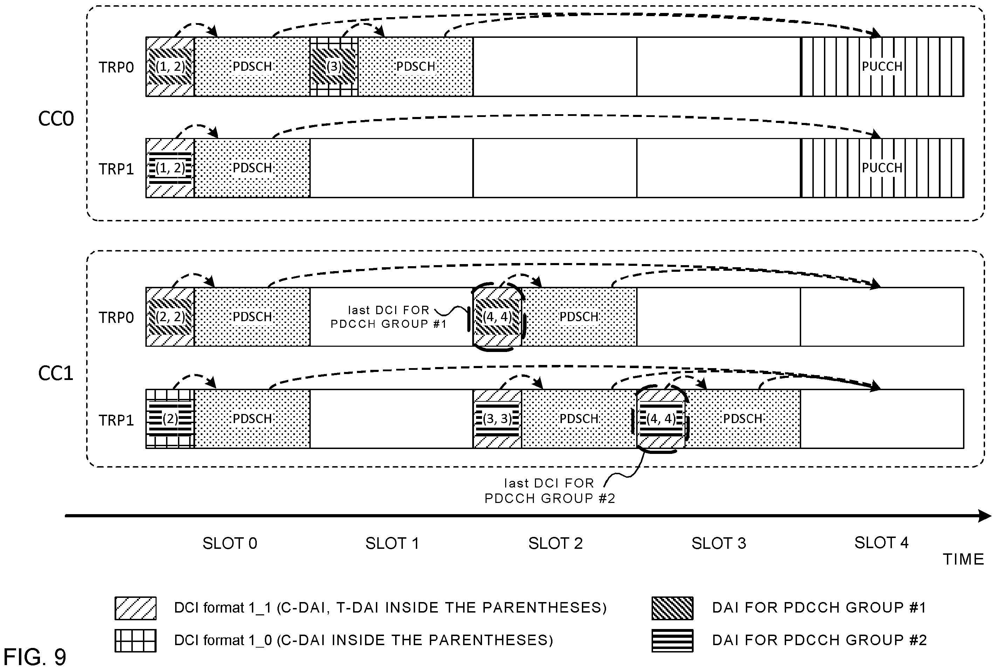

FIG. 9 is a diagram showing one example of the "last DCI format" in Embodiment 3-1. This example is the same example as in FIG. 6, and redundant descriptions are not repeated.

In FIG. 9, the last DCI format of the PDCCH group #1 corresponds to a DCI format which is received in the slot 2 of the CC1 and includes the DAI ((D-DAI, T-DAI) = (4, 4)) for the PDCCH group #1. The UE may determine PUCCH resources (PUCCH resources to transmit to the TRP 0 in the slot 4 of the CC0) corresponding to the PDCCH group #1, based on the PRI of the last DCI format of the PDCCH group #1.

Further, the last DCI format of the PDCCH group #2 corresponds to a DCI format which is received in the slot 3 of the CC1 and includes the DAI ((D-DAI, T-DAI) = (4, 4)) for the PDCCH group #2. The UE may determine PUCCH resources (PUCCH resources to transmit to the TRP 1 in the slot 4 of the CC0) corresponding to the PDCCH group #2, based on the PRI of the last DCI format of the PDCCH group #2.

### [Embodiment 3-2]

In the case of Embodiment 3-2, the UE may determine PUCCH resources to transmit the HARQ-ACK in some subslot based on the PRI included in the last DCI format among DCI formats (e.g., DCI formats 1_0/1_1) indicative of PUCCH transmission of the subslot.

The "last DCI format" may mean a last (that corresponds to a highest index) DCI format in the case of assigning indexes to detected DCI formats corresponding to PUCCH transmission in the same subslot, in ascending order across serving cells with respect to the same PUCCH monitoring occasion, and further, assigning indexes in ascending order across indexes of the PUCCH monitoring occasion.

In addition, time resources (e.g., subslot) of the PUCCH corresponding to the DCI may be determined based on a value of the PDSCH-to-HARQ feedback timing indicator field of the DCI, may be determined based on a value of another field, may be determined based on higher layer signaling, or may be determined based on specifications.

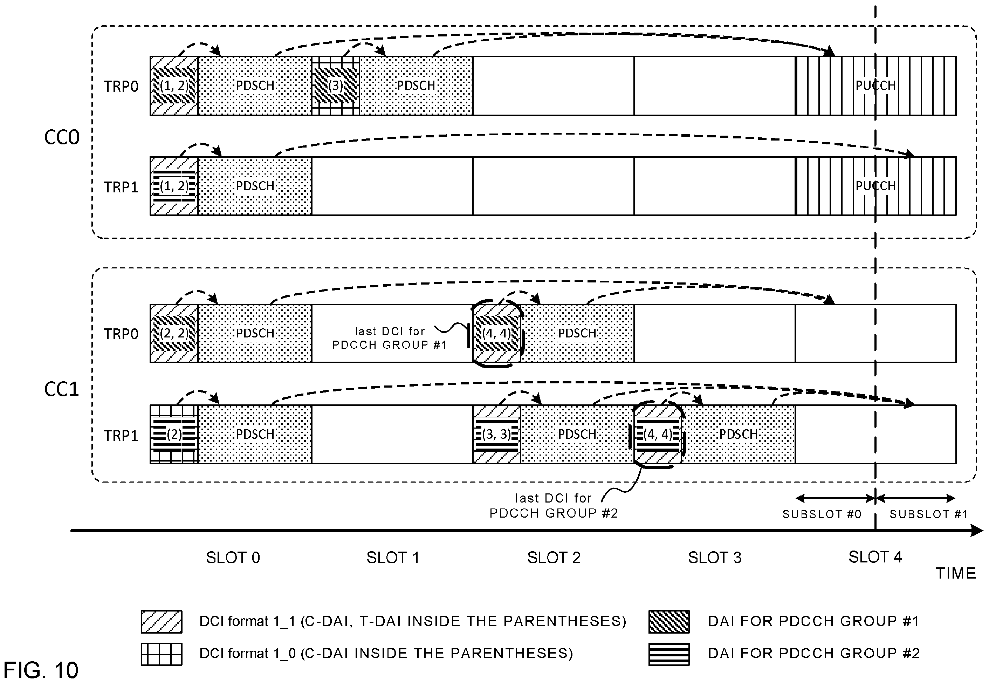

FIG. 10 is a diagram showing one example of the "last DCI format" in Embodiment 3-2. This example is the same example as in FIG. 7, and redundant descriptions are not repeated.

In FIG. 10, the last DCI format of the PDCCH group #1 corresponds to a DCI format which is received in the slot 2 of the CC1 and includes the DAI ((D-DAI, T-DAI)=(4,4)) for the PDCCH group #1. The UE may determine PUCCH resources (PUCCH resources to transmit in the subslot #0 of the slot 4 of the CC0) corresponding to the PDCCH group #1, based on the PRI of the last DCI format of the PDCCH group #1.

Further, the last DCI format of the PDCCH group #2 corresponds to a DCI format which is received in the slot 3 of the CC1 and includes the DAI ((D-DAI, T-DAI)=(4,4)) for the PDCCH group #2. The UE may determine PUCCH resources (PUCCH resources to transmit in the subslot #1 of the slot 4 of the CC0) corresponding to the PDCCH group #2, based on the PRI of the last DCI format of the PDCCH group #2.

### [Embodiment 3-3]

In the case of Embodiment 3-3, the UE may determine PUCCH resources to transmit the HARQ-ACK in some subslot based on the PRI included in the last DCI format among DCI formats (e.g., DCI formats 1_0/1_1) indicative of PUCCH transmission of the subslot.

Among detected DCI formats corresponding to PUCCH transmission of the same subslot, the "last DCI format" may mean a last (that corresponds to a highest index) DCI format in the case of assigning indexes to DCI formats corresponding to the same CORESET group (i.e., the same PDCCH group) in ascending order across serving cells with respect to the same PUCCH monitoring occasion, and further, assigning indexes in ascending order across indexes of the PUCCH monitoring occasion.

In addition, time resources (e.g., subslot) of the PUCCH corresponding to the DCI may be determined based on a value of the PDSCH-to-HARQ feedback timing indicator field of the DCI, may be determined based on a value of another field, may be determined based on higher layer signaling, or may be determined based on specifications.

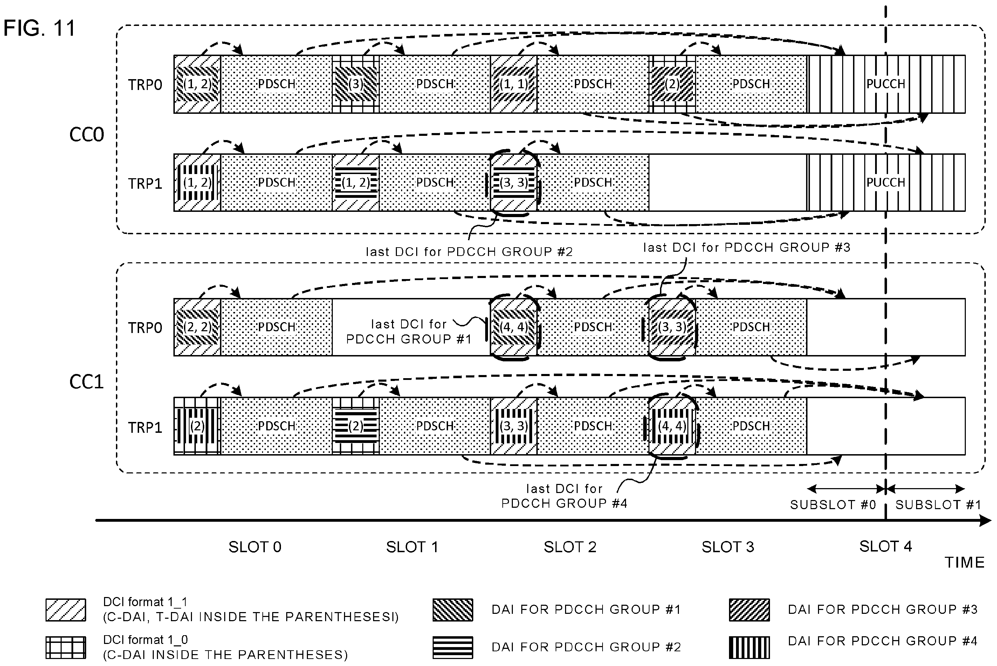

FIG. 11 is a diagram showing one example of the "last DCI format" in Embodiment 3-3. This example is the same example as in FIG. 8, and redundant descriptions are not repeated.

In FIG. 11, the last DCI format of the PDCCH group #1 corresponds to a DCI format which is received in the slot 2 of the CC1 and includes the DAI ((D-DAI, T-DAI)=(4,4)) for the PDCCH group #1. The UE may determine PUCCH resources (PUCCH resources to transmit to the TRP 0 in the subslot #0 of slot 4 of the CC0) corresponding to the PDCCH group #1, based on the PRI of the last DCI format of the PDCCH group #1.

Further, the last DCI format of the PDCCH group #2 corresponds to a DCI format which is received in the slot 2 of the CC0 and includes the DAI ((D-DAI, T-DAI)=(3,3)) for the PDCCH group #2. The UE may determine PUCCH resources (PUCCH resources to transmit to the TRP 1 in the subslot #0 of the slot 4 of the CC0) corresponding to the PDCCH group #2, based on the PRI of the last DCI format of the PDCCH group #2.

Furthermore, the last DCI format of the PDCCH group #3 corresponds to a DCI format which is received in the slot 3 of the CC1 and includes the DAI ((D-DAI, T-DAI)=(3,3)) for the PDCCH group #3. The UE may determine PUCCH resources (PUCCH resources to transmit to the TRP 0 in the subslot #1 of the slot 4 of the CC0) corresponding to the PDCCH group #3, based on the PRI of the last DCI format of the PDCCH group #3.

Still furthermore, the last DCI format of the PDCCH group #4 corresponds to a DCI format which is received in the slot 3 of the CC1 and includes the DAI ((D-DAI, T-DAI)=(4,4)) for the PDCCH group #4. The UE may determine PUCCH resources (PUCCH resources to transmit to the TRP 1 in the subslot #1 of the slot 4 of the CC0) corresponding to the PDCCH group #4, based on the PRI of the last DCI format of the PDCCH group #4.

### <Other Embodiments>

In addition, transmission corresponding to the subslot index of the present disclosure may include transmission corresponding to the slot index. For example, in the case where the subslot #0 corresponds to the TRP 0, and the subslot #1 corresponds to the TRP 1, PUCCH transmission on a slot-by-slot basis may correspond to at least one of the TRP 0 and the TRP 1. PDCCHs of the DCI corresponding to PUCCHs on a slot-by-slot basis may constitute a PDCCH group.

The UE may report the UE capability information including information about at least one of the following capabilities to the network:
· whether or not to support simultaneous reception of a plurality of pieces of DCI (multi-DCI, multiple PDCCH) (e.g., whether or not to allow detection of two or more DCI formats of a plurality of PDCCHs of which first symbols are received in the same symbol in the same slot);
whether or not to support simultaneous reception of a plurality of pieces of DCI which are not in a particular QCL relationship (e.g., which are not the QCL-Type-D);
whether or not to support NCJT of PDSCH (in other words, simultaneous reception of a plurality of PDSCHs (codewords) which are not in a particular QCL relationship (e.g., which are not the QCL-Type-D));
· whether or not to support the separate HARQ-ACK;
· whether or not to support the joint HARQ-ACK;
· whether or not to support the separate HARQ-ACK codebook;
· whether or not to support the joint HARQ-ACK codebook;
· whether or not to support single DCI;
· whether or not to support multi-DCI;
· whether or not to support subslot-based HARQ-ACK feedback;
· whether or not to support slot-based HARQ-ACK feedback;
the number of pieces of DCI that the UE is capable of detecting (decoding) in a given PDCCH monitoring occasion or in the same symbol (e.g., OFDM symbol);
the number of pieces of DCI which is not in a particular QCL relationship (e.g., which is not the QCL-Type-D) that the UE is capable of detecting (decoding) in a given PDCCH monitoring occasion or in the same symbol (e.g., OFDM symbol);
the number of PDSCHs (or codewords) that the UE is capable of detecting (or decoding) in the same symbol (e.g., OFDM symbol); and
the number of PDSCHs (or codewords) which are not in a particular QCL relationship (e.g., which are not the QCL-Type-D) that the UE is capable of detecting (or decoding) in the same symbol (e.g., OFDM symbol).

In the case of reporting at least one of the above-mentioned UE capabilities, the UE may assume to apply (or, be configured to apply) at least one of the above-mentioned Embodiments. The network may notify the UE that reports at least one of the above-mentioned capabilities of information for enabling operation based on at least one of the above-mentioned Embodiments.

In the case where the joint HARQ-ACK feedback is not configured (or is not enabled or is disabled), the UE may assume that the separate HARQ-ACK feedback is configured (or is enabled).

In addition, in the case of not supporting simultaneous reception of a plurality of pieces of DCI (or the simultaneous reception is not configured), or in the case of not allowing detection of two or more DCI formats of a plurality of PDCCHs of which first symbols are received in the same symbol in the same slot (or detection is not configured), or in the case of not supporting simultaneous reception of a plurality of pieces of DCI which is not in a particular QCL relationship (e.g., which is not the QCL-Type-D) (or the simultaneous reception is not configured), the UE may not expect to detect two DCI formats of a plurality of PDCCHs of which first symbols are received in the same symbol in the some slot which are the two DCI formats for scheduling PDSCH reception of the same cell, or SPS PDSCH release.

Further, in the case of not supporting simultaneous reception of a plurality of pieces of DCI (or the simultaneous reception is not configured), or in the case of not allowing detection of two or more DCI formats of a plurality of PDCCHs of which first symbols are received in the same symbol in the same slot (or detection is not configured), or in the case of not supporting simultaneous reception of a plurality of pieces of DCI which is not in a particular QCL relationship (e.g., which is not QCL-Type-D) (or the simultaneous reception is not configured), the UE may allow detection when two DCI formats of a plurality of PDCCHs of which first symbols are received in the same symbol in the some slot which are the two DCI formats for scheduling PDSCH reception of the same cell or SPS PDSCH release are in a particular QCL relationship (e.g., QCL-Type-D), or may not expect detection when the two DCI formats are not in the particular QCL relationship.

In addition, such operation may be applied to only a given frequency range (e.g., Frequency Range 2 (FR 2)). By such operation, it is possible to decrease complexity of the UE.

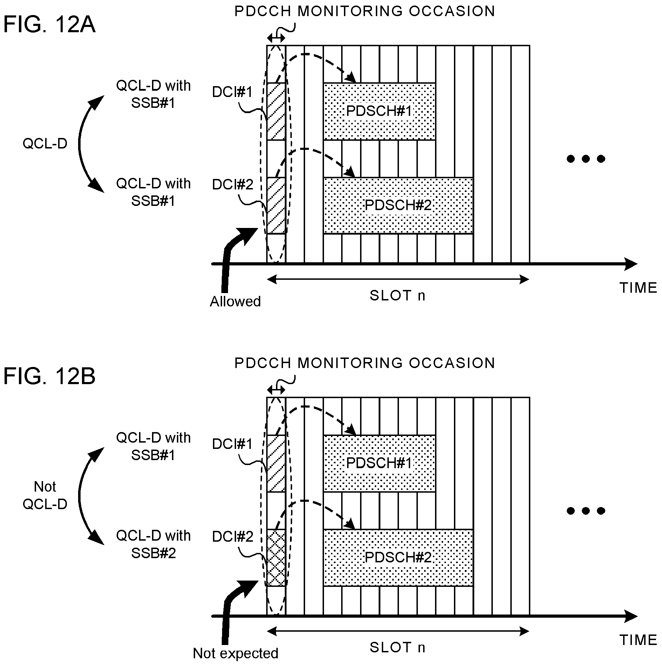

FIGs. 12A and 12B are diagrams showing one example of assumption about detection of DCI formats in other Embodiments. In this example, DCI #1 transmitted in a symbol #0 of a slot n schedules a PDSCH #1. Further, DCI #2 similarly transmitted in the symbol #0 of the slot n schedules a PDSCH #2.

In addition, in this example, PUCCH resources for the HARQ-ACK in response to each DCI may be scheduled in the same slot n+k, or may be scheduled in a different slot.

In FIG. 12A, it is assumed that both of the DCI #1 and DCI #2 is QCL with a Synchronization Signal Block (SSB) #1. In the case of not supporting simultaneous reception of a plurality of pieces of DCI that is not in the relationship of QCL-Type-D, as shown in FIG. 12A, the UE may allow simultaneous reception of a plurality of pieces of DCI in the relationship of QCL-Type-D. On the other hand, as shown in FIG. 12B, the UE may not expect simultaneous reception of a plurality of pieces of DCI (a plurality of pieces of DCI in the relationship of QCL-Type-D with respective different SSBs) that is not in the relationship of QCL-Type-D.

Further, in the case of not supporting simultaneous reception of a plurality of pieces of DCI (or the simultaneous reception is not configured), or in the case of not allowing detection of two or more DCI formats of a plurality of PDCCHs of which first symbols are received in the same symbol in the same slot (or detection is not configured), or in the case of not supporting simultaneous reception of a plurality of pieces of DCI which is not in a particular QCL relationship (e.g., which is not QCL-Type-D) (or the simultaneous reception is not configured), the UE may allow detection when two DCI formats of a plurality of PDCCHs of which first symbols are received in the same symbol in the some slot which are the two DCI formats for scheduling PDSCH reception of the same cell or SPS PDSCH release correspond to the same CORESET group ID, or not may expect detection when the two formats do not correspond to the same CORESET group ID.

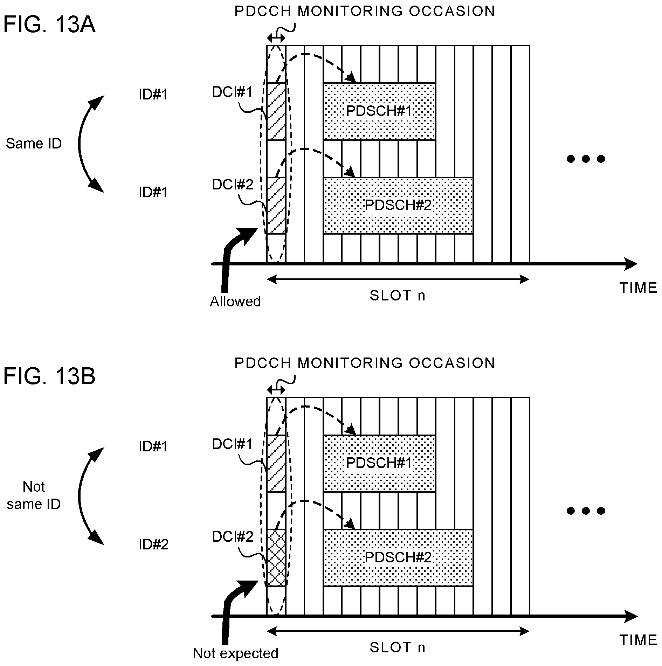

FIGs. 13A and 13B are diagrams showing another example of assumption about detection of DCI formats in the other Embodiments. In this example, DCI #1 transmitted in a symbol #0 of a slot n schedules a PDSCH #1. Further, DCI #2 similarly transmitted in the symbol #0 of the slot n schedules a PDSCH #2.

In addition, in this example, PUCCH resources for the HARQ-ACK in response to each DCI may be scheduled in the same slot n+k, or may be scheduled in a different slot.

In FIG. 13A, both of the DCI #1 and the DCI #2 is associated with the same CORESET group ID #1. In the case of not supporting simultaneous reception of a plurality of pieces of DCI that is not in the relationship of QCL-Type-D, as shown in FIG. 13A, the UE may allow simultaneous reception of a plurality of pieces of DCI of the same CORESET group. On the other hand, as shown in FIG. 13B, the UE may not expect simultaneous reception of a plurality of pieces of DCI of different CORESET groups (a plurality of pieces of DCI that corresponds to respective different CORESET group IDs).

In addition, in the present disclosure, the UE configured for a plurality of TRPs may assume to determine at least one of a TRP corresponding to DCI, a TRP corresponding to a PDSCH or UL transmission (PUCCH, PUSCH, SRS, etc.) scheduled by DCI and the like, based on at least one of the following items:
· value of a given filed (e.g., field for designating the TRP, antenna field, PRI) included in the DCI;
DMRS (e.g., sequence of the DMRS, resource, CDM group, DMRS port, DMRS port group, etc.) corresponding to scheduled PDSCH/PUSCH;
DMRS (e.g., sequence of the DMRS, resource, CDM group, DMRS port, DMRS port group, etc.) corresponding to the PDCCH on which the DCI is transmitted; and
CORESET (e.g., ID of the CORESET, scramble ID (which maybe read with a sequence ID) in which the DCI is received.

In the present disclosure, the single PDCCH (DCI) may be called a first scheduling type (e.g., scheduling type A (or type 1) of PDCCH (DCI)). Further, the multiple PDCCH (DCI) may be called a second scheduling type (e.g., scheduling type B (or type 2) of PDCCH (DCI)).

In the present disclosure, it may be assumed that the single PDCCH is supported in the case where multi-TRP uses ideal backhaul. It may be assumed that the multiple PDCCH is supported in the case of using non-ideal backhaul between the multi-TRP.

In addition, the ideal backhaul may be called DMRS port group type 1, reference signal-related group type 1, antenna port group type 1 and the like. The non-ideal backhaul may be called DMRS port group type 2, reference signal-related group type 2, antenna port group type 2 and the like. The names are not limited thereto.

### (Radio communication system)

A configuration of a radio communication system according to one Embodiment of the present disclosure will be described below. In the radio communication system, communication is performed by using one of radio communication methods according to the respective above-mentioned Embodiments of the disclosure or combination thereof.

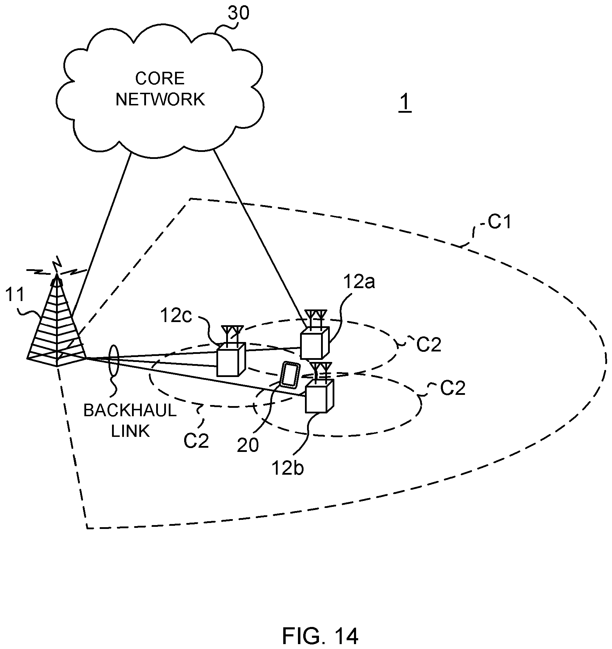

FIG. 14 is a diagram showing one example of a schematic configuration of the radio communication system according to one Embodiment. The radio communication system 1 may be a system for actualizing communication using Long Term Evolution (LTE), 5th generation mobile communication system New Radio (5G NR) and the like specified by Third Generation Partnership Project (3GPP).

Further, the radio communication system 1 may support dual connectivity (Multi-RAT Dual Connectivity (MR-DC)) among a plurality of Radio Access Technologies (RAT). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and the like.

In EN-DC, a base station (eNB) of LTE (E-UTRA) is a master node (Master Node (MN)), and a base station (gNB) of NR is a secondary node (SecondaryNode (SN)). InNE-DC, a base station (gNB) of NR is an MN, and a base station (gNB) of LTE (E-UTRA) is an SN.

The radio communication system 1 may support dual connectivity (e.g., dual connectivity (NR-NR Dual Connectivity (NN-DC) where both of the MN and SN are the base stations (gNB) of NR) among a plurality of base stations in the same RAT.

The radio communication system 1 may be provided with a base station 11 for forming a macrocell C1 with relatively wide coverage, and base stations 12 (12a to 12c) disposed inside the macrocell C1 to form small cells C2 narrower than the macrocell C1. A user terminal 20 may be positioned in at least one cell. The arrangement, numbers and the like of each cell and user terminal 20 are not limited to the aspect shown in the figure. Hereinafter, in the case of not distinguishing between the base stations 11 and 12, the stations are collectively called a base station 10.

The user terminal 20 may connect to at least one of a plurality of base stations 10. The user terminal 20 may use at least one of carrier aggregation (Carrier Aggregation (CA)) using a plurality of component carriers (Component Carrier (CC)) and dual connectivity (DC).

Each CC may be included in at least one of a first frequency band (Frequency Range 1 (FR1)) and second frequency band (Frequency Range 2 (FR2)). The macrocell C1 may be included in the FR1, and the small cell C2 may be included in the FR2. For example, the FR1 may be a frequency band (sub-6 GHz) of 6 GHz or less, and the FR2 may be a high frequency band (above-24 GHz) higher than 24 GHz. In addition, the frequency bands, definitions and the like of the FR1 and FR2 are not limited thereto, and for example, the FR1 may correspond to a frequency band higher than the FR2.

Further, in each CC, the user terminal 20 may perform communication using at least one of Time Division Duplex (TDD) and Frequency Division Duplex (FDD).

A plurality of base stations 10 may be connected by cables (e.g., optical fiber in conformity with Common Public Radio Interface (CPRI), X2 interface, etc.), or by radio (e.g., NR communication). For example, in the case of using NR communication as backhaul between the base stations 11 and 12, the base station 11 corresponding to a higher station may be called an Integrated Access Backhaul (IAB) donor, and the base station 12 corresponding to a relay station (relay) may be called an IAB node.

The base station 10 may be connected to a core network 30 via another base station 10 or directly. For example, the core network 30 may include at least one of Evolved Packet Core (EPC), 5G Core Network (5GCN), Next Generation Core (NGC) and the like.

The user terminal 20 may be a terminal supporting at least one of communication schemes such as LTE, LTE-A, and 5G.

In the radio communication system 1, an Orthogonal Frequency Division Multiplexing (OFDM)-based radio access scheme may be used. For example, on at least one of downlink (Downlink (DL)) and uplink (Uplink (UL)) may be used Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA) and the like.

The radio access scheme may be called a waveform. In addition, in the radio communication system 1, another radio access scheme (e.g., another single carrier transmission scheme, another multi-carrier transmission scheme) may be used for the radio access scheme of UL and DL.

As downlink channels, in the radio communication system 1 may be used a downlink shared channel (Physical Downlink Shared Channel (PDSCH)) shared by user terminals 20, broadcast channel (Physical Broadcast Channel (PBCH)), downlink control channel (Physical Downlink Control Channel (PDCCH)) and the like.

Further, as uplink channels, in the radio communication system 1 may be used an uplink shared channel (Physical Uplink Shared Channel (PUSCH)) shared by user terminals 20, uplink control channel (Physical Uplink ControlChannel (PUCCH)), random access channel (Physical Random Access Channel (PRACH)) and the like.

User data, higher layer control information, System Information Block (SIB) and the like are transmitted on the PDSCH. The user data, higher layer control information and the like may be transmitted on the PUSCH. Further, Master Information Block (MIB) may be transmitted on the PBCH.

Lower layer control information may be transmitted on the PDCCH. For example, the lower layer control information may include downlink control information (Downlink Control Information (DCI)) including scheduling information of at least one of the PDSCH and PUSCH.

In addition, DCI for scheduling the PDSCH may be called a DL assignment, DL DCI and the like, and DCI for scheduling the PUSCH may be called a UL grant, UL DCI and the like. In addition, the PDSCH may be read with DL data, and the PUSCH may be read with UL data.

For detection of the PDCCH, a control resource set (COntorl REsource SET (CORESET)) and search space may be used. The CORESET corresponds to resources to search for the DCI. The search space corresponds to a search region and search method of PDCCH candidates. One CORESET may be associated with one or a plurality of search spaces. The UE may monitor the CORESET related to some search space based on search space configuration.

One search space may correspond to PDCCH candidates corresponding to one or a plurality of aggregation levels. One or a plurality of search spaces may be called a search space set. In addition, the "search space", "search space set", "search space configuration", "search space set configuration", "CORESET", "CORESET configuration" and the like of the present disclosure may be read with one another.

On the PUCCH may be transmitted uplink control information (Uplink Control Information (UCI)) including at least one of Channel State Information (CSI), receipt confirmation information (for example, which may be called Hybrid Automatic Repeat reQuest ACKnowledgement (HARQ-ACK), ACK/NACK and the like) and Scheduling Request (SR). A random access preamble to establish connection with the cell may be transmitted on the PRACH.

In addition, in the present disclosure, the downlink, uplink and the like may be expressed without attaching "link". Further, various channels may be expressed without attaching "Physical" at the beginning.

In the radio communication system 1 may be transmitted a Synchronization Signal (SS), Downlink Reference Signal (DL-RS) and the like. As the DL-RS, in the radio communication system 1 may be transmitted a Cell-specific Reference Signal (CRS), Channel State Information Reference Signal (CSI-RS), demodulation reference signal (DeModulation Reference Signal (DMRS)), Positioning Reference signal (PRS), Phase Tracking Reference Signal (PTRS) and the like.

For example, the synchronization signal may be at least one of a Primary Synchronization Signal (PSS) and Secondary Synchronization Signal (SSS). A signal block including the SS (PSS, SSS) and PBCH (and DMRS for the PBCH) may be called an SS/PBCH block, SS Block (SSB) and the like. In addition, the SS, SSB and the like may also be called the reference signal.

Further, in the radio communication system 1, a Sounding Reference Signal (SRS), demodulation reference signal (DMRS) and the like may be transmitted as an Uplink Reference Signal (UL-RS). In addition, the DMRS may be called a user terminal-specific reference signal (UE-specific Reference Signal).

### (Base station)

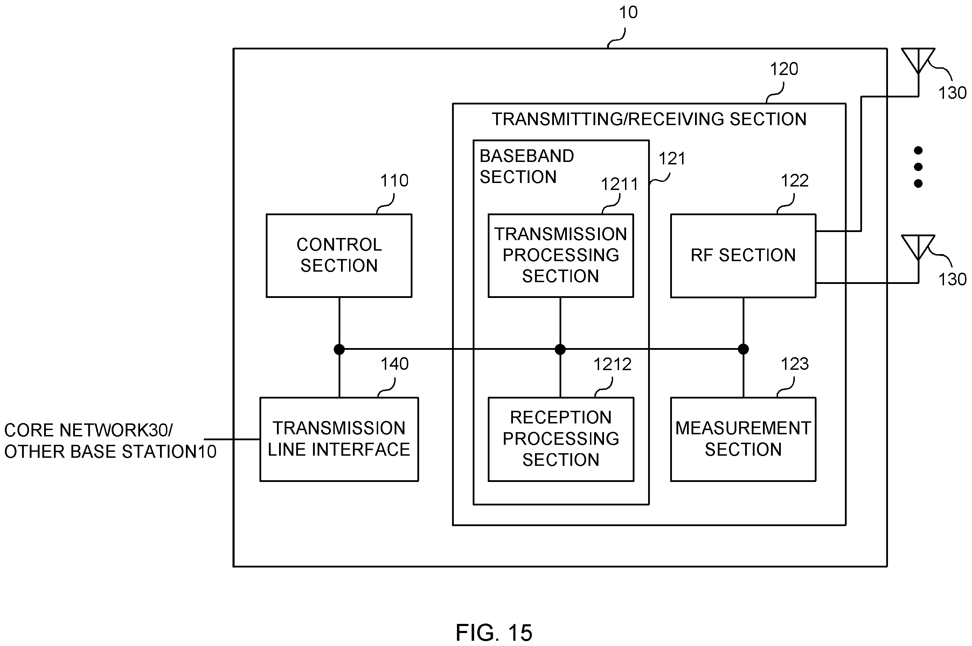

FIG. 15 is a diagram showing one example of a configuration of the base station according to one Embodiment. The base station 10 is provided with a control section 110, transmitting/receivingsection120, transmitting/receiving antennas 130, and transmission line interface 140. In addition, the base station may be provided with one or more of each of the control section 110, transmitting/receiving section 120, transmitting/receiving antenna 130, and transmission line interface 140.

In addition, this example mainly illustrates function blocks of feature parts in this Embodiment, and the base station 10 may be assumed to have other function blocks required for radio communication. A part of processing of each section described below maybe omitted.

The control section 110 performs control of the entire base station 10. The control section 110 is capable of being comprised of a controller, control circuit and the like explained based on common recognition in the technical field according to the present disclosure.

The control section 110 may control generation of signals, scheduling (e.g., resource allocation, mapping) and the like. The control section 110 may control transmission/reception, measurement and the like using the transmitting/receiving section 120, transmitting/receiving antenna 130 and transmission line interface 140. The control section 110 may generate data, control information, sequence and the like to transmit as a signal, and transfer the resultant to the transmitting/receiving section 120. The control section 110 may perform call processing (configuration, release, etc.) of a communication channel, state management of the base station 10, management of radio resources and the like.

The transmitting/receiving section 120 may include a baseband section 121, Radio Frequency (RF) section 122 and measurement section 123. The baseband section 121 may include a transmission processing section 1211 and reception processing section 1212. The transmitting/receiving section 120 is capable of being comprised of a transmitter/receiver, RF circuit, baseband circuit, filter, phase shifter, measurement circuit, transmitting/receiving circuit and the like explained based on the common recognition in the technical field according to the present disclosure.

The transmitting/receiving section 120 may be comprised as an integrated transmitting/receiving section, or may be comprised of a transmitting section and a receiving section. The transmitting section may be comprised of a transmission processing section 1211 and RF section 122. The receiving section may be comprised of a reception processing section 1212, RF section 122, and measurement section 123.

The transmitting/receiving antenna 130 is capable of being comprised of an antenna, for example, an array antenna and the like explained based on the common recognition in the technical field according to the present disclosure.

The transmitting/receiving section 120 may transmit the above-mentioned downlink channel, synchronization signal, downlink reference signal and the like. The transmitting/receiving section 120 may receive the above-mentioned uplink channel, uplink reference signal and the like.

The transmitting/receiving section 120 may form at least one of a transmission beam and reception beam, using digital beam forming (e.g., precoding), analog beam forming **(e.g.,** phase rotation) and the like.

The transmitting/receiving section 120 (transmission processing section 1211) may perform, for example, on the data, control information and the like acquired from the control section 110, processing of Packet Data Convergence Protocol (PDCP) layer, processing (e.g., RLC retransmission control) of Radio Link Control (RLC) layer, processing (e.g., HARQ retransmission control) of Medium Access Control (MAC) layer and the like to generate a bit sequence to transmit.

The transmitting/receiving section 120 (transmission processing section 1211) may perform, on the bit sequence to transmit, transmission processing such as channel coding (which may include error correcting coding), modulation, mapping, filter processing, Discrete Fourier Transform (DFT) processing (as necessary), Inverse Fast Fourier Transform (IFFT) processing, precoding and digital-analog conversion, and output a baseband signal.

The transmitting/receiving section 120 (FR section 122) may perform modulation to a radio frequency band, filter processing, amplification and the like on the baseband signal to transmit a signal of the radio frequency band via the transmitting/receiving antenna 130.

On the other hand, the transmitting/receiving section 120 (RF section 122) may perform amplification, filter processing, demodulation to a baseband signal and the like on a signal of the radio frequency band received by the transmitting/receiving antenna 130.

The transmitting/receiving section 120 (reception processing section 1212) may apply reception processing such as analog-digital conversion, Fast Fourier Transform (FTT) processing, Inverse Discrete Fourier Transform (IDFT) processing (as necessary), filter processing, demapping, demodulation, decoding (which may include error correcting decoding), MAC layer processing, processing of RCL layer, and processing of PDCP layer to the acquired baseband signal, and acquire the user data, and the like.

The transmitting/receiving section 120 (measurement section 123) may perform measurement on a received signal. For example, based on the received signal, the measurement section 123 may perform Radio Resource Management (RRM) measurement, Channel State Information (CSI) measurement and the like. The measurement section 123 may measure received power (e.g., Reference Signal Received Power (RSRP)), received quality (e.g., Reference Signal Received Quality (RSRQ), Signal to Interference plus Noise Ratio (SINR), Signal to Noise Ratio (SNR)), signal strength (e.g., Received Signal Strength Indicator (RSSI)), propagation path information (e.g., CSI) and the like. The measurement result may be output to the control section 110.

The transmission line interface 140 may transmit/receive signals (backhaul signaling) to/from an apparatus included in the core network 30, another base station 10 and the like to perform acquisition, transmission and the like of user data (user plain data), control plain data and the like for the user terminal 20.

In addition, the transmitting section and receiving section of the base station 10 in the present disclosure may be comprised of at least one of the transmitting/receiving section 120, transmitting/receiving antenna 130 and transmission line interface 140.

Inaddition, the transmitting/receiving section 120 may transmit a PDSCH to the user terminal 20. The control section 110 may control the PDSCH so that at least one of time and frequency resources overlaps with a PDSCH transmitted from another base station 10.

### (User terminal)

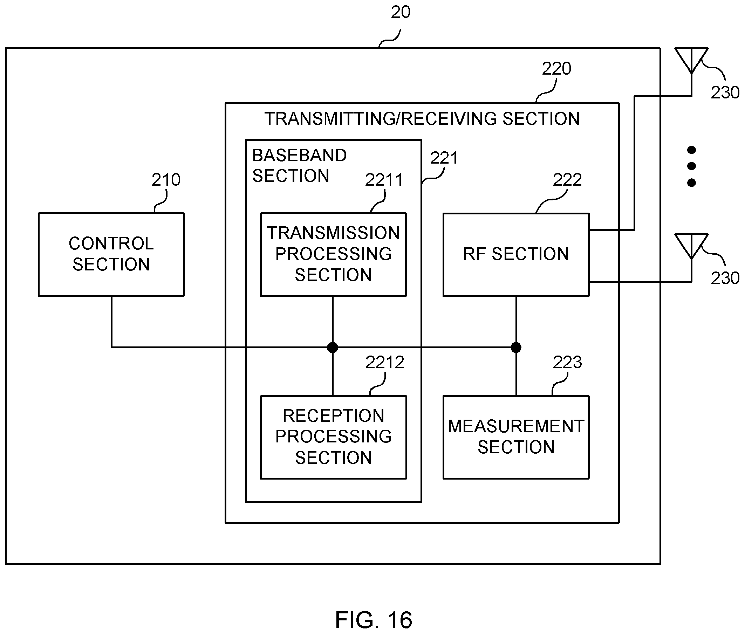

FIG. 16 is a diagram showing one example of a configuration of the user terminal according to one Embodiment. The user terminal 20 is provided with a control section 210, transmitting/receiving section 220, and transmitting/receiving antennas 230. In addition, the user terminal may be provided with one or more of each of the control section 210, transmitting/receiving section 220 and transmitting/receiving antenna 230.

In addition, this example mainly illustrates function blocks of feature parts in this Embodiment, and the user terminal 20 may be assumed to have other function blocks required for radio communication. A part of processing of each section described below maybe omitted.

The control section 210 performs control of the entire user terminal 20. The control section 210 is capable of being comprised of a controller, control circuit and the like explained based on the common recognition in the technical field according to the present disclosure.

The control section 210 may control generation of signals, mapping and the like. The control section 210 may control transmission/reception, measurement and the like using the transmitting/receiving section 220 and transmitting/receiving antenna 230. The control section 210 may generate data, control information, sequence and the like to transmit as a signal, and transfer the resultant to the transmitting/receiving section 220.

The transmitting/receiving section 220 may include a baseband section 221, RF section 222 and measurement section 223. The baseband section 221 may include a transmission processing section 2211 and reception processing section 2212. The transmitting/receiving section 220 is capable of being comprised of a transmitter/receiver, RF circuit, baseband circuit, filter, phase shifter, measurement circuit, transmitting/receiving circuit and the like explained based on the common recognition in the technical field according to the present disclosure.

The transmitting/receiving section 220 may be comprised as an integrated transmitting/receiving section, or may be comprised of a transmitting section and a receiving section. The transmitting section may be comprised of a transmission processing section 2211 and RF section 222. The receiving section may be comprised of a reception processing section 2212, RF section 222, and measurement section 223.

The transmitting/receiving antenna 230 is capable of being comprised of an antenna, for example, an array antenna and the like explained based on the common recognition in the technical field according to the present disclosure.

The transmitting/receiving section 220 may receive the above-mentioned downlink channel, synchronization signal, downlink reference signal and the like. The transmitting/receiving section 220 may transmit the above-mentioned uplink channel, uplink reference signal and the like.

The transmitting/receiving section 220 may form at least one of a transmission beam and reception beam, using digital beam forming (e.g., precoding), analog beam forming (e.g., phase rotation) and the like.

The transmitting/receiving section 220 (transmission processing section 2211) may perform, for example, on the data, control information and the like acquired from the control section 210, processing of PDCP layer, processing (e.g., RLC retransmission control) of RLC layer, processing (e.g., HARQ retransmission control) of MAC layer and the like to generate a bit sequence to transmit.

The transmitting/receiving section 220 (transmission processing section 2211) may perform, on the bit sequence to transmit, transmission processing such as channel coding (which may include error correcting coding), modulation, mapping, filter processing, DFT processing (as necessary), IFFT processing, precoding and digital-analog conversion, and output a baseband signal.

In addition, whether or not to apply the DFT processing may be based on configuration of transform precoding. In the case where transform precoding is enabled on some channel (e.g., PUSCH), the transmitting/receiving section 220 (transmission processing section 2211) may perform the DFT processing as the above-mentioned transmission processing so as to transmit the channel using a DFT-s-OFDM waveform. In the other case, the section may not perform the DFT processing as the above-mentioned transmission processing.

The transmitting/receiving section 220 (FR section 222) may perform modulation to a radio frequency band, filter processing, amplification and the like on the baseband signal to transmit a signal of the radio frequency band via the transmitting/receiving antenna 230.

On the other hand, the transmitting/receiving section 220 (RF section 222) may perform amplification, filter processing, demodulation to a baseband signal and the like on a signal of the radio frequency band received by the transmitting/receiving antenna 230.

The transmitting/receiving section 220 (reception processing section 2212) may apply reception processing such as analog-digital conversion, FTT processing, IDFT processing (as necessary), filter processing, demapping, demodulation, decoding (which may include error correcting decoding), MAC layer processing, processing of RCL layer, and processing of PDCP layer to the acquired baseband signal, and acquire the user data, and the like.

The transmitting/receiving section 220 (measurement section 223) may perform measurement on a received signal. For example, based on the received signal, the measurement section 223 may perform RRM measurement, CSI measurement and the like. The measurement section 223 may measure received power (e.g., RSRP), received quality (e.g., RSRQ, SINR, SNR), signal strength (e.g., RSSI), propagation path information (e.g., CSI) and the like. The measurement result may be output to the control section 210.

In addition, the transmitting section and receiving section of the user terminal 20 in the present disclosure may be comprised of at least one of the transmitting/receiving section 220 and transmitting/receiving antenna 230.

In addition, the transmitting/receiving section220 may receive a first PDSCH (Physical Downlink Shared Channel) from a first Transmission/ReceptionPoint (TRP), and a second PDSCH from a second TRP where at least one of time and frequency resources overlaps with the first PDSCH. In other words, the transmitting/receiving section 220 may receive multiple PDSCHs.

The control section 210 may control of first control (separate HARQ-ACK) to transmit a first Hybrid Automatic Repeat reQuest ACKnowledgement (HARA-ACK) in response to the first PDSCH to the first TRP and transmit a second HARQ-ACK in response to the second PDSCH to the second TRP.

The control section 210 may determine whether or not to allow detection of two or more downlink control information (DCI) formats of a plurality of downlink control channels (PDCCHs) of which first symbols are received in the same symbol in some slot which are the two or more DCI formats for scheduling downlink shared channel (PDSCH)) reception of the same cell or release of semi-persistent scheduling PDSCH, and for indicating corresponding Hybrid Automatic Repeat reQuest ACKnowledgement (HARQ-ACK) transmission in the same period (e.g., same slot, same subslot), based on at least one of a given higher layer signaling index (e.g., CORESET group ID) and a subslot index.

In the case of allowing detection of the two or more DCI formats, the transmitting/receiving section 220 may perform the corresponding HARQ-ACK transmission in the same period, using respective different uplink control channel resources (PUCCHresources) to transmit (separate HARQ-ACK) .

In addition, the control section 210 may determine to allow detection of the two or more DCI formats respectively related to different values of the given higher layer signaling index.

The control section 210 may determine to allow detection of the two or more DCI formats respectively related to different values of the subslot index.

The control section 210 may determine to allow detection of the two or more DCI formats which are respectively related to different values of the given higher layer signaling index and are related to the same value of the subslot index.

The control section 210 may assume that a downlink assignment index (e.g., C-DAI, T-DAI) of the detected downlink control channel is counted for each given group (e.g., downlink control channel (PDCCH) group).

### (Hardware configuration)

In addition, the block diagrams used in explanation of the above-mentioned Embodiments show blocks on a function-by-function basis. These function blocks (configuration sections) are actualized by any combination of at least one of hardware and software. Further, the method for actualizing each function block is not limited particularly. In other words, each function block may be actualized using a single apparatus combined physically or logically, or two or more apparatuses that are separated physically or logically are connected directly or indirectly (e.g., using cable, radio, etc.), and each function block may be actualized using a plurality of these apparatuses. The function block may be actualized by combining the above-mentioned one apparatus or the above-mentioned plurality of apparatuses and software.

Herein, the function includes judging, determining, deciding, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning and the like, but is not limited thereto. For example, the function block (configuration section) having the function of transmitting may be called a transmitting unit, transmitter and the like. In any case, as described above, the actualizing method is not limited particularly.

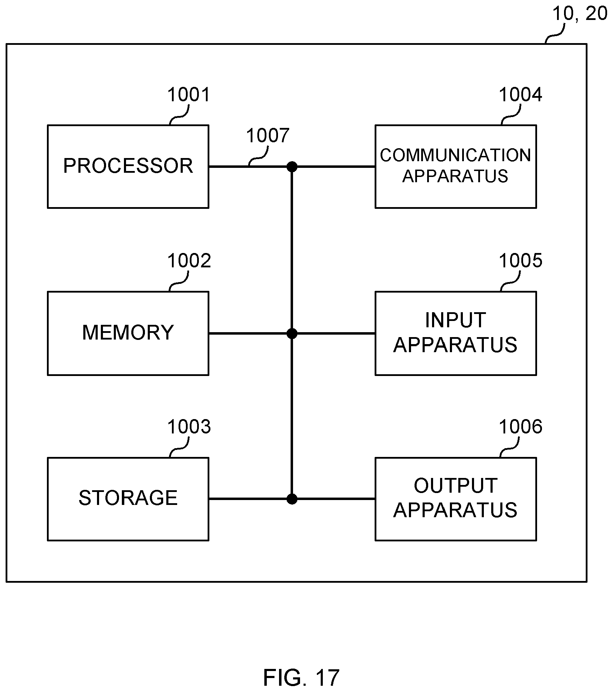

For example, each of the base station, user terminal and the like in one Embodiment of the present disclosure may function as a computer that performs the processing of the radio communication method of the disclosure. FIG. 17 is a diagram showing one example of a hardware configuration of each of the base station and user terminal according to one Embodiment. Each of the base station 10 and user terminal 20 as described above may be physically configured as a computer apparatus including a processor 1001, memory 1002, storage 1003, communication apparatus 1004, input apparatus 1005, output apparatus 1006, bus 1007 and the like.

In addition, in the present disclosure, it is possible to read the letter of apparatus, circuit, device, section, unit and the like with one another. With respect to each apparatus shown in the figure, the hardware configuration of each of the base station 10 and the user terminal 20 may be configured so as to include one or a plurality of apparatuses, or may be configured without including a part of apparatuses.

For example, a single processor 1001 is shown in the figure, but a plurality of processors may exist. Further, the processing may be executed by a single processor, or may be executed by two or more processors at the same time, sequentially or using another technique. In addition, the processor 1001 may be implemented on one or more chips.

For example, each function in the base station 10 and user terminal 20 is actualized in a manner such that given software (program) is read on the hardware of the processor 1001, memory 1002 and the like, and that the processor 1001 thereby performs computations, and controls communication via the communication apparatus 1004, and at least one of read and write of data in the memory 1002 and storage 1003.

For example, the processor 1001 operates an operating system to control the entire computer. The processor 1001 may be comprised of a Central Processing Unit (CPU) including interfaces with peripheral apparatuses, control apparatus, computation apparatus, register and the like. For example, at least a part of the above-mentioned control section 110 (210), transmitting/receiving section 120 (220) and the like may be actualized by the processor 1001.

Further, the processor 1001 reads the program (program code), software module, data and the like on the memory 1002 from at least one of the storage 1003 and the communication apparatus 1004, and according thereto, executes various kinds of processing. Used as the program is a program that causes the computer to execute at least a part of operation described in the above-mentioned Embodiments. For example, the control section 110 (210) may be actualized by a control program stored in the memory 1002 to operate in the processor 1001, and the other function blocks may be actualized similarly.

The memory 1002 is a computer-readable storage medium, and for example, may be comprised of at least one of Read Only Memory (ROM), Erasable Programmable ROM (EPROM), Electrically EPROM (EEPROM), Random Access Memory (RAM) and other proper storage media. The memory 1002 may be called the register, cache, main memory (main storage apparatus) and the like. The memory 1002 is capable of storing the program (program code), software module and the like executable to implement the radio communication method according to one Embodiment of the present disclosure.

The storage 1003 is a computer-readable storage medium, and for example, may be comprised of at least one of a flexible disk, floppy (Registered Trademark) disk, magneto-optical disk (e.g., compact disk (Compact Disc ROM (CD-ROM), etc.), digital multi-purpose disk, Blu-ray (Registered Trademark) disk), removable disk, hard disk drive, smart card, flash memory device (e.g., card, stick, key drive), magnetic stripe, database, server and other proper storage media. The storage 1003 may be called an auxiliary storage apparatus.

The communication apparatus 1004 is hardware (transmitting/receiving device) to perform communication between computers via at least one of a wired network and a wireless network, and for example, is also referred to as a network device, network controller, network card, communication module and the like. For example, in order to actualize at least one of Frequency Division Duplex (FDD) and Time Division Duplex (TDD), the communication apparatus 1004 may be comprised by including a high-frequency switch, duplexer, filter, frequency synthesizer and the like. For example, the transmitting/receiving section 120 (220), transmitting/receiving antenna 130 (230) and the like as described above may be actualized by the communication apparatus 1004. The transmitting/receiving section 120 (220) may be made by physically or logically separated implementation using a transmitting section 120a (220a) and receiving section 120b (220b).

The input apparatus 1005 is an input device (e.g., keyboard, mouse, microphone, switch, button, sensor, etc.) that receives input from the outside. The output apparatus 1006 is an output device (e.g., display, speaker, Light Emitting Diode (LED) lamp, etc.) that performs output to the outside. In addition, the input apparatus 1005 and output apparatus 1006 may be an integrated configuration (e.g., touch panel).

Further, each apparatus of the processor 1001, memory 1002 and the like is connected on the bus 1007 to communicate information. The bus 1007 may be configured using a single bus, or may be configured using different buses between respective apparatuses.

Furthermore, each of the base station 10 and user terminal 20 may be configured by including hardware such as a microprocessor, Digital Signal Processor (DSP), Application Specific Integrated Circuit (ASIC), Programmable Logic Device (PLD), and Field Programmable Gate Array (FPGA), or a part or the whole of each function block may be actualized using the hardware. For example, the processor 1001 may be implemented using at least one of the hardware.

### (Modification)

In addition, the term explained in the present disclosure and the term required to understand the present disclosure may be replaced with a term having the same or similar meaning. For example, the channel, symbol and signal (or signaling) may be read with one another. Further, the signal may be a message. The reference signal is capable of being abbreviated as RS, and according to the standard to apply, may be called a pilot, pilot signal and the like. Furthermore, the component carrier (CC) may be called a cell, frequency carrier, carrier frequency and the like.

A radio frame may be comprised of one or a plurality of frames in the time domain. The one or each of the plurality of frames constituting the radio frame may be called a subframe. Further, the subframe may be comprised of one or a plurality of slots in the time domain. The subframe may be a fixed time length (e.g., 1 ms) that is not dependent on numerology.

Herein, the numerology may be a communication parameter applied to at least one of transmission and reception of some signal or channel. For example, the numerology may indicate at least one of SubCarrier Spacing (SCS), bandwidth, symbol length, cyclic prefix length, Transmission Time Interval (TTI), the number of symbols per TTI, radio frame configuration, particular filtering processing performed by a transmitter/receiver in the frequency domain, particular windowing processing performed by a transmitter/receiver in the time domain and the like.

The slot may be comprised of one or a plurality of symbols (Orthogonal Frequency Division Multiplexing (OFDM) symbols, Single Carrier Frequency Division Multiple Access (SC-FDMA) symbols and the like) in the time domain. Further, the slot may a time unit based on numerology.

The slot may include a plurality of mini-slots . Each mini-slot may be comprised of one or a plurality of symbols in the time domain. Further, the mini-slot may be called a subslot. The mini-slot may be comprised of the number of symbols lower than the slot. A PDSCH (or PUSCH) transmitted in a time unit larger than the mini-slot may be called PDSCH (PUSCH) mapping type A. A PDSCH (or PUSCH) transmitted using the mini-slot may be called PDSCH (PUSCH) mapping type B.

Each of the radio frame, subframe, slot, mini-slot and symbol represents a time unit in transmitting a signal. For the radio frame, subframe, slot, mini-slot and symbol, another name corresponding to each of them may be used. The time units such as the frame, subframe, slot, mini-slot and symbol in the present disclosure may be read with one another.

For example, one subframe may be called TTI, a plurality of contiguous subframes may be called TTI, or one slot or one mini-slot may be called TTI. In other words, at least one of the subframe and TTI may be the subframe (1 ms) in existing LTE, may be a frame (e.g., 1 to 13 symbols) shorter than 1 ms, or may be a frame longer than 1 ms. In addition, instead of the subframe, the unit representing the TTI may be called the slot, mini-slot and the like.

Herein, for example, the TTI refers to a minimum time unit of scheduling in radio communication. For example, in the LTE system, the base station performs scheduling for allocating radio resources (frequency bandwidth, transmit power and the like capable of being used in each user terminal) to each user terminal in a TTI unit. In addition, the definition of the TTI is not limited thereto.

The TTI may be a transmission time unit of a data packet (transport block) subjected to channel coding, code block, codeword and the like, or may be a processing unit of scheduling, link adaptation and the like. In addition, when the TTI is given, a time segment (e.g., the number of symbols) to which the transport block, code block, codeword and the like are actually mapped may be shorter than the TTI.

In addition, when one slot or one mini-slot is called the TTI, one or more TTIs (i.e., one or more slots, or one or more mini-slots) may be the minimum time unit of scheduling. Further, the number of slots (the number of mini-slots) constituting the minimum time unit of scheduling may be controlled.

The TTI having a time length of 1 ms may be called ordinary TTI (TTI in 3GPP LTE Rel.8-12), normal TTI, long TTI, ordinary subframe, normal subframe, long subframe, slot and the like. The TTI shorter than the ordinary TTI may be called shortened TTI, short TTI, partial or fractional TTI, shortened subframe, short subframe, mini-slot, subslot, slot and the like.

In addition, the long TTI (e.g., ordinary TTI, subframe, etc.) may be read with TTI having a time length exceeding 1 ms, and the short TTI (e.g., shortened TTI, etc.) may be read with TTI having a TTI length of 1 ms or more and less than the TTI length of the long TTI.

The resource block (RB) is a resource allocation unit in the time domain and frequency domain, and may include one or a plurality of contiguous subcarriers in the frequency domain. The number of subcarriers contained in the RB may be the same irrespective of the numerology, and for example, may be "12". The number of subcarriers contained in the RB may be determined based on the numerology.

Further, the RB may include one or a plurality of symbols in the time domain, and may be a length of 1 slot, 1 mini-slot, 1 subcarrier, or 1 TTI. Each of 1 TTI, 1 subframe and the like may be comprised of one or a plurality of resource blocks.

In addition, one or a plurality of RBs may be called a physical resource block (Physical RB (PRB)), subcarrier group (Sub-Carrier Group (SCG)), Resource Element Group (REG), PRB pair, RB pair and the like.

Further, the resource block may be comprised of one or a plurality of resource elements (Resource Element (RE)). For example, 1 RE may be a radio resource region of 1 subcarrier and 1 symbol.

A Bandwidth Part (BWP) (which may be called a partial bandwidth, etc.) may represent a subset of contiguous common RBs (common resource blocks) for some numerology in some carrier. Herein, the common RB may be identified by an index of the RB with a common reference point of the carrier as reference. The PRB may be defined by some BWP, and may be numbered within the BWP.

The BWP may include UL BWP (BWP for UL) and DL BWP (BWP for DL). For a UE, one or a plurality of BWPs may be configured within one carrier.

At least one of configured BWPs may be active, and the UE may not assume that a given signal/channel is transmitted and received outside the active BWP. In addition, the "cell", "carrier" and the like in the present disclosure may be read with the "BWP".

In addition, structures of the above-mentioned radio frame, subframe, slot, mini-slot, symbol and the like are only illustrative. For example, it is possible to modify, in various manners, configurations of the number of subframes included in the radio frame, the number of slots per subframe or radio frame, the number of mini-slots included in the slot, the numbers of symbols and RBs included in the slot or mini-slot, the number of subcarriers included in the RB, the number of symbols within the TTI, the symbol length, the cyclic prefix (CP) length and the like.

Further, the information, parameter and the like explained in the present disclosure may be expressed using an absolute value, may be expressed using a relative value from a given value, or may be expressed using another corresponding information. For example, the radio resource may be indicated by a given index.

The names used in the parameter and the like in the present disclosure are not restrictive names in any respects. Further, equations and the like using these parameters may be different from those explicitly disclosed in the disclosure. It is possible to identify various channels (PUCCH, PDCCH, etc.) and information elements, by any suitable names, and therefore, various names assigned to these various channels and information elements are not restrictive names in any respects.

The information, signal and the like explained in the present disclosure may be represented by using any of various different techniques. For example, the data, order, command, information, signal, bit, symbol, chip and the like capable of being described over the entire above-mentioned explanation maybe represented by voltage, current, electromagnetic wave, magnetic fieldormagnetic particle, optical field or photon, or any combination thereof.

Further, the information, signal and the like are capable of being output at least one of from a higher layer to a lower layer, and from the lower layer to the higher layer. The information, signal and the like may be input and output via a plurality of network nodes.

The input/output information, signal and the like may be stored in a particular place (e.g., memory), or may be managed using a management table. The input/output information, signal and the like are capable of being rewritten, updated or edited. The output information, signal and the like may be deleted. The input information, signal and the like may be transmitted to another apparatus.

Notification of the information is not limited to the Aspects/Embodiments described in the present disclosure, and may be performed using another method. For example, notification of the information in the disclosure may be performed using physical layer signaling (e.g., Downlink Control Information (DCI), Uplink Control Information (UCI)), higher layer signaling (e.g., Radio Resource Control (RRC) signaling, broadcast information (Master Information Block (MIB)), System Information Block (SIB) and the like), MediumAccessControl (MAC) signaling), other signals, or combination thereof.

In addition, the physical layer signaling may be called Layer 1/Layer 2 (L1/L2) control information (L1/L2 control signal), L1 control information (L1 control signal) and the like. Further, the RRC signaling may be called RRC message, and for example, may be RRC connection setup (RRC Connection Setup) message, RRC connection reconfiguration (RRC Connection Reconfiguration) message, and the like. Furthermore, for example, the MAC signaling may be notified using MAC Control Element (MAC CE).

Further, notification of given information (e.g., notification of "being X") is not limited to explicit notification, and may be performed implicitly (e.g., notification of the given information is not performed, or by notification of different information).

The decision may be made with a value ("0" or "1") expressed by 1 bit, may be made with a Boolean value represented by true or false, or may be made by comparison with a numerical value (e.g., comparison with a given value).

Irrespective of that the software is called software, firmware, middle-ware, micro-code, hardware descriptive term, or another name, the software should be interpreted widely to mean a command, command set, code, code segment, program code, program, sub-program, software module, application, software application, software package, routine, sub-routine, object, executable file, execution thread, procedure, function and the like.

Further, the software, command, information and the like may be transmitted and received via a transmission medium. For example, when the software is transmitted from a website, server or another remote source using at least one of wired techniques (coaxial cable, optical fiber cable, twisted pair, Digital Subscriber Line (DSL) and the like) and wireless techniques (infrared, microwave and the like), at least one of the wired technique and the wireless technique is included in the definition of the transmission medium.

The terms of "system" and "network" used in the present disclosure are capable of being used interchangeably. A "network" may mean an apparatus (e.g., base station) included in the network.

In the present disclosure, the terms of "precoding", "precoder", "weight (precoding weight)", "Quasi-Co-Location (QCL)", "Transmission Configuration Indication state (TCI state)", "spatial relation", "spatial domain filter", "transmit power", "phase rotation", "antenna port", "antenna port group", "layer", "the number of layers", "rank", "resource", "resource set", "resource group", "beam", "beam width", "beam angle", "antenna", "antenna element", "panel" and the like are capable of being used interchangeably.

In the present disclosure, the terms of "Base Station (BS)", "radio base station", "fixed station", "NodeB", "eNB (eNodeB)", "gNB (gNodeB)", "access point", "Transmission Point (TP)", "Reception Point (RP)", "Transmission/Reception Point (TRP)", "panel", "cell", "sector", "cell group", "carrier", "component carrier" and the like are capable of being used interchangeably. There is the case where the base station is called by the terms of macrocell, small cell, femto-cell, pico-cell and the like.

The base station is capable of accommodating one or a plurality of (e.g., three) cells. When the base station accommodates a plurality of cells, the entire coverage area of the base station is capable of being segmented into a plurality of smaller areas, and each of the smaller areas is also capable of providing communication services by a base station sub-system (e.g., small base station (Remote Radio Head (RRH)) for indoor use). The term of "cell" or "sector" refers to a part or the whole of coverage area of at least one of the base station and the base station sub-system that perform communication services in the coverage.

In the present disclosure, the terms of "Mobile Station (MS)", "user terminal", "User Equipment (UE)", "terminal" and the like are capable of being used interchangeably.

There is the case where the Mobile Station may be called using a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be called a transmitting apparatus, receiving apparatus, radio communication apparatus and the like. In addition, at least one of the base station and the mobile station may be a device installed in a mobile unit, mobile unit itself and the like. The mobile unit may be a vehicle (e.g., car, airplane, etc.), may be a mobile unit (e.g., drone, self-driving car, etc.) without human intervention, or may be a robot (crewed type or uncrewed type). In addition, at least one of the base station and the mobile station includes an apparatus that does always not move at the time of communication operation. For example, at least one of the base station and the mobile station may be an Internet of Things (IoT) device such as a sensor.

Further, the base station in the present disclosure may be read with the user terminal. For example, each Aspect/Embodiment of the disclosure may be applied to a configuration where communication between the base station and the user terminal is replaced with communication among a plurality of user terminals (for example, which may be called Device-to-Device (D2D), Vehicle-to-Everything (V2X), etc.). In this case, the functions that the above-mentioned base station 10 has may be the configuration that the user terminal 20 has. Further, the words of "up", "down" and the like may be read with a word (e.g., "side") that corresponds to Device-to-Device communication. For example, the uplink channel, downlink channel and the like may be read with a side channel.

Similarly, the user terminal in the present disclosure may be read with the base station. In this case, the functions that the above-mentioned user terminal 20 has may be the configuration that the base station 10 has.

In the present disclosure, operation performed by the base station may be performed by an upper node thereof in some case. In a network including one or a plurality of network nodes having the base station, it is obvious that various operations performed for communication with the terminal are capable of being performed by the base station, one or more network nodes (e.g., Mobility Management Entity (MME), Serving-Gateway (S-GW) and the like are considered, but the disclosure is not limited thereto) except the base station, or combination thereof.

Each Aspect/Embodiment explained in the present disclosure may be used alone, may be used in combination, or may be switched and used according to execution. Further, with respect to the processing procedure, sequence, flowchart and the like of each explained in the disclosure, unless there is a contradiction, the order may be changed. For example, with respect to the methods explained in the disclosure, elements of various steps are presented in illustrative order, and are not limited to the presented particular order.

Each Aspect/Embodiment explained in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (Registered Trademark)), CDMA 2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), system using another proper radio communication method, the next-generation system extended based thereon and the like. Further, a plurality of systems may be combined (e.g., combination of LTE or LTE-A and 5G, etc.) to apply.

The description of "based on" used in the present disclosure does not mean "based on only", unless otherwise specified. In other words, the description of "based on" means both of "based on only" and "based on at least".

Any references to elements using designations of "first", "second" and the like used in the present disclosure do not limit the amount or order of these elements overall. These designations are capable of being used in the disclosure as the useful method to distinguish between two or more elements. Accordingly, references of first and second elements do not mean that only two elements are capable of being adopted, or that the first element should be prior to the second element in any manner.

There is the case where the term of "determining" used in the present disclosure includes various types of operation. For example, "determining" maybe regarded as "determining" judging, calculating, computing, processing, deriving, investigating, looking up (search, inquiry) (e.g., looking up in a table, database or another data structure), ascertaining and the like.

Further, "determining" may be regarded as "determining" receiving (e.g., receiving information), transmitting (e.g., transmitting information), input, output, accessing (e.g., accessing data in memory) and the like.

Furthermore, "determining" may be regarded as "determining" resolving, selecting, choosing, establishing, comparing and the like. In other words, "determining" may be regarded as "determining" some operation.

Still furthermore, "determining" may be read with "assuming", "expecting", "considering" and the like.

The terms of "connected" and "coupled" used in the present disclosure or any modifications thereof mean direct or indirect every connection or coupling among two or more elements, and are capable of including existence of one or more intermediate elements between two mutually "connected" or "coupled" elements. Coupling or connection between elements may be physical, may be logical or may be combination thereof. For example, "connection" may be read with "access".

In the present disclosure, in the case where two elements are connected, it is possible to consider that two elements are mutually "connected" or "coupled", by using one or more electric wires, cable, print electric connection, etc. and as some non-limited and non-inclusive examples, electromagnetic energy having wavelengths in a radio frequency region, microwave region and light (both visible and invisible) region, or the like.

In the present disclosure, the term of "A and B are different" may mean that "A and B are different from each other". In addition, the term may mean that "each of A and B is different from C". The terms of "separate", "coupled" and the like may be interpreted in the same manner as "different".

In the case of using "include", "including", and modifications thereof in the present disclosure, as in the term of "comprising", these terms are intended to be inclusive. Further, the term of "or" used in the disclosure is intended to be not exclusive OR.

In the present disclosure, in the case where articles are added by translation, for example, as "a", "an" and "the" in English, the disclosure may include that nouns continued from these articles are in the plural.

As described above, the invention according to the present disclosure is described in detail. The scope of the present invention is defined by the scope of the appended claims.

## Claims

1. A terminal (20) comprising:
a control section (210) configured to determine, based on a higher layer signaling index, received from a base station (10), whether or not to allow detection of a first downlink control information DCI, format of a first physical downlink control channel, PDCCH, and a second DCI format of a second PDCCH that schedule physical downlink shared channels PDSCHs, in a same cell and indicate corresponding Hybrid Automatic Repeat request, ACKnowledgement, HARQ-ACK, transmission in a same period, symbols of the first PDCCH partially overlapping symbols of the second PDCCH; and
a transmitting section (220) configured to, when detection of the first DCI format and the second DCI format is allowed, perform the corresponding HARQ-ACK transmission in the same period by using different uplink control channel resources.

2. The terminal (20) according to claim 1, wherein the control section (210) is configured to determine that detection of the first DCI format and the second DCI format that are associated with mutually different values of the higher layer signaling index is allowed.

3. The terminal (20) according to claim 1, wherein the control section (210) is configured to determine detection of the first DCI format and the second DCI format that are associated with mutually different values of a subslot index is allowed.

4. The terminal (20) according to claim 2, wherein the control section (210) is configured to determine that detection of the first DCI format and the second DCI format that are associated with the mutually different values of the higher layer signaling and with same values of a subslot index is allowed.

5. The terminal (20) according to any one of claims 1 to 4, wherein the control section (210) is configured to assume that a downlink assignment index of a downlink control channel detected is counted per higher layer signaling index.

6. A radio communication method, the method being performed by a terminal (20), comprising:
determining, based on a higher layer signaling index, received from a base station (10), whether or not to allow detection of a first downlink control information, DCI, format of a first physical downlink control channel, PDCCH, and a second DCI format of a second PDCCH that schedule physical downlink shared channels, PDSCHs, in a same cell and indicate corresponding Hybrid Automatic Repeat request ACKnowledgement, HARQ-ACK, transmission in a same period, symbols of the first PDCCH partially overlapping symbols of the second PDCCH; and
when detection of the first DCI format and the second DCI format is allowed, performing the corresponding HARQ-ACK transmission in the same period by using different uplink control channel resources.

7. A system comprising: a terminal (20); and a base station (10), wherein
the terminal (20) comprises:
a control section (210) configured to determine, based on a higher layer signaling index, whether or not to allow detection of a first downlink control information, DCI, format of a first physical downlink control channel, PDCCH, and a second DCI format of a second PDCCH that schedule physical downlink shared channels, PDSCHs, in a same cell and indicate corresponding Hybrid Automatic Repeat request ACKnowledgement, HARQ-ACK, transmission in a same period, symbols of the first PDCCH partially overlapping symbols of the second PDCCH; and
a transmitting section (220) configured to, when detection of the first DCI format and the second DCI format is allowed, performs the corresponding HARQ-ACK transmission in the same period by using different uplink control channel resources; and
the base station (10) comprises:
a transmitting section (120) configured to transmit, to the terminal (20), information about the higher layer signaling index.

## Patentansprüche

1. Endgerät (20), umfassend:
einen Steuerabschnitt (210), der so konfiguriert ist, dass er auf der Grundlage eines von einer Basisstation (10) empfangenen Signalisierungsindex einer höheren Schicht bestimmt,
ob eine Detektion eines ersten Abwärtsverbindungssteuerinformations-, DCI-, Formats eines ersten physikalischen Abwärtsverbindungssteuerkanals, PDCCH, und eines zweiten DCI-Formats eines zweiten PDCCH, die gemeinsam genutzte physikalische Abwärtsverbindungskanäle PDSCHs planen, in einer selben Zelle, und entsprechende hybride automatische Wiederholungsanfrage-Bestätigungs-, HARQ-ACK-, Übertragung in einer selben Periode anzeigen, erlaubt werden soll oder nicht, wobei sich Symbole des ersten PDCCH teilweise Symbole des zweiten PDCCH überlappen; und
einen Übertragungsabschnitt (220), der so konfiguriert ist, dass er, wenn die Detektion des ersten DCI-Formats und des zweiten DCI-Formats erlaubt ist, die entsprechende HARQ-ACK-Übertragung in derselben Periode unter Verwendung unterschiedlicher Aufwärtsverbindungssteuerkanalressourcen durchführt.

2. Endgerät (20) nach Anspruch 1, wobei der Steuerabschnitt (210) so konfiguriert ist, dass er bestimmt, dass die Detektion des ersten DCI-Formats und des zweiten DCI-Formats, die mit gegenseitig unterschiedlichen Werten des Signalisierungsindex einer höheren Schicht verbunden sind, erlaubt ist.

3. Endgerät (20) nach Anspruch 1, wobei der Steuerabschnitt (210) so konfiguriert ist, dass er bestimmt, dass die Detektion des ersten DCI-Formats und des zweiten DCI-Formats, die mit gegenseitig unterschiedlichen Werten eines Teilschlitz-Index verbunden sind, erlaubt ist.

4. Endgerät (20) nach Anspruch 2, wobei der Steuerabschnitt (210) so konfiguriert ist, dass er bestimmt, dass die Detektion des ersten DCI-Formats und des zweiten DCI-Formats, die mit den gegenseitig unterschiedlichen Werten der Signalisierung einer höheren Schicht und mit denselben Werten eines Teilschlitz-Index verbunden sind, erlaubt ist.

5. Endgerät (20) nach einem der Ansprüche 1 bis 4, wobei der Steuerabschnitt (210) so konfiguriert ist, dass er davon ausgeht, dass ein Abwärtsverbindungszuweisungsindex eines detektierten Abwärtsverbindungssteuerkanals pro Signalisierungsindex einer höheren Schicht gezählt wird.

6. Funkkommunikationsverfahren, wobei das Verfahren durch ein Endgerät (20) durchgeführt wird, das umfasst:
Bestimmen, auf der Grundlage eines Signalisierungsindex einer höheren Schicht, der von einer Basisstation (10) empfangen wird, ob eine Detektion eines ersten Abwärtsverbindungssteuerinformations-, DCI-, Formats eines ersten physikalischen Abwärtsverbindungssteuerkanals, PDCCH, und eines zweiten DCI-Formats eines zweiten PDCCH, die gemeinsam genutzte physikalische Abwärtsverbindungskanäle, PDSCHs, in einer selben Zelle planen und entsprechende hybride automatische Wiederholungsanfrage-Bestätigungs-, HARQ-ACK-, Übertragung in einer selben Periode anzeigen, erlaubt werden soll oder nicht, wobei sich Symbole des ersten PDCCH teilweise mit Symbolen des zweiten PDCCH überlappen; und
wenn die Detektion des ersten DCI-Formats und des zweiten DCI-Formats erlaubt ist, Durchführen der entsprechenden HARQ-ACK-Übertragung in derselben Periode unter Verwendung unterschiedlicher Aufwärtsverbindungssteuerkanalressourcen.

7. System, umfassend: ein Endgerät (20); und eine Basisstation (10), wobei
das Endgerät (20) umfasst:
einen Steuerabschnitt (210), der so konfiguriert ist, dass er auf der Grundlage eines Signalisierungsindex einer höheren Schicht bestimmt, ob er die Detektion eines ersten Abwärtsverbindungssteuerinformations-, DCI-, Formats eines ersten physikalischen Abwärtsverbindungssteuerkanals, PDCCH, und eines zweiten DCI-Formats eines zweiten PDCCH, die gemeinsam genutzte physikalische Abwärtsverbindungskanäle, PDSCHs, in einer selben Zelle planen und entsprechende hybride automatische Wiederholungsanfrage-Bestätigungs-, HARQ-ACK-, Übertragung in einer selben Periode anzeigen, erlaubt werden soll oder nicht, wobei sich Symbole des ersten PDCCH teilweise mit Symbolen des zweiten PDCCH überlappen; und
einen Übertragungsabschnitt (220), der so konfiguriert ist, dass er, wenn die Detektion des ersten DCI-Formats und des zweiten DCI-Formats erlaubt ist, die entsprechende HARQ-ACK-Übertragung in derselben Periode unter Verwendung unterschiedlicher Aufwärtsverbindungssteuerkanalressourcen durchführt; und
die Basisstation (10) umfasst:
einen Übertragungsabschnitt (120), der so konfiguriert ist, dass er an das Endgerät (20) Informationen über den Signalisierungsindex einer höheren Schicht überträgt.

## Revendications

1. Terminal (20) comprenant :
une section de commande (210) configurée pour déterminer, sur la base d'un indice de signalisation de couche supérieure, reçu à partir d'une station (10) de base,
s'il faut ou non permettre la détection d'un premier format d'information de commande de liaison descendante, DCI, d'un premier canal physique de commande de liaison descendante, PDCCH, et d'un second format DCI d'un second PDCCH qui planifie des canaux physiques partagés de liaison descendante, PDSCH, dans une même cellule et indiquent une transmission d'accusé de réception de demande de répétition automatique hybride, HARQ-ACK, correspondante dans une même période, des symboles du premier PDCCH chevauchant partiellement des symboles du second PDCCH ; et
une section de transmission (220) configurée pour, lorsque la détection du premier format DCI et du second format DCI est autorisée, réaliser la transmission HARQ-ACK correspondante dans la même période en utilisant des ressources de canal de commande de liaison montante différentes.

2. Terminal (20) selon la revendication 1, dans lequel la section de commande (210) est configurée pour déterminer qu'une détection du premier format DCI et du second format DCI qui sont associés à des valeurs mutuellement différentes de l'indice de signalisation de couche supérieure est autorisée.

3. Terminal (20) selon la revendication 1, dans lequel la section de commande (210) est configurée pour déterminer qu'une détection du premier format DCI et du second format DCI qui sont associés à des valeurs mutuellement différentes d'un indice de sous-créneau est autorisée.

4. Terminal (20) selon la revendication 2, dans lequel la section de commande (210) est configurée pour déterminer qu'une détection du premier format DCI et du second format DCI qui sont associés aux valeurs mutuellement différentes de la signalisation de couche supérieure et à des mêmes valeurs d'un indice de sous-créneau est autorisée.

5. Terminal (20) selon l'une quelconque des revendications 1 à 4, dans lequel la section de commande (210) est configurée pour supposer qu'un indice d'attribution de liaison descendante d'un canal de commande de liaison descendante détecté est compté par indice de signalisation de couche supérieure.

6. Procédé de communication radio, le procédé étant réalisé par un terminal (20), comprenant :
la détermination, sur la base d'un indice de signalisation de couche supérieure, reçu à partir d'une station (10) de base, s'il faut permettre ou non la détection d'un premier format d'information de commande de liaison descendante, DCI, d'un premier canal physique de commande de liaison descendante, PDCCH, et d'un second format DCI d'un second PDCCH qui planifient des canaux physiques partagés de liaison descendante, PDSCH, dans une même cellule et indiquent une transmission d'accusé de réception de demande de répétition automatique hybride, HARQ-ACK, correspondante dans une même période, des symboles du premier PDCCH chevauchant partiellement des symboles du second PDCCH ; et
lorsque la détection du premier format DCI et du second format DCI est autorisée, la réalisation de la transmission HARQ-ACK correspondante dans la même période en utilisant des ressources de canal de commande de liaison montante différentes.

7. Système comprenant : un terminal (20) ; et une station (10) de base, dans lequel
le terminal (20) comprend :
une section de commande (210) configurée pour déterminer, sur la base d'un indice de signalisation de couche supérieure, si permettre ou non la détection d'un premier format d'information de commande de liaison descendante, DCI, d'un premier canal physique de commande de liaison descendante, PDCCH, et d'un second format DCI d'un second PDCCH qui planifient des canaux physiques partagés de liaison descendante, PDSCH, dans une même cellule et indiquent une transmission d'accusé de réception de demande de répétition automatique hybride, HARQ-ACK, correspondante dans une même période, des symboles du premier PDCCH chevauchant partiellement des symboles du second PDCCH ; et
une section de transmission (220) configurée pour, lorsque la détection du premier format DCI et du second format DCI est autorisée, réaliser la transmission HARQ-ACK correspondante dans la même période en utilisant des ressources de canal de commande de liaison montante différentes ; et
la station (10) de base comprend :
une section de transmission (120) configurée pour transmettre, au terminal (20), des informations sur l'indice de signalisation de couche supérieure.
